# EUROPEAN PATENT SPECIFICATION

(11) **EP 3 128 454 B1**
(45) Date of publication and mention of the grant of the patent: **03.07.2019**
(21) Application number: 16153089.4
(22) Date of filing: 28.01.2016
(51) Int. Cl.: G06F 21/32, G06F 21/60, G06F 3/12, G06K 9/00, H04N 1/00

(54) **AUTHENTICATION APPARATUS AND PROCESSING APPARATUS**
AUTHENTIFIZIERUNGSVORRICHTUNG UND VERARBEITUNGSVORRICHTUNG
APPAREIL D'AUTHENTIFICATION ET APPAREIL DE TRAITEMENT

(30) Priority: 03.08.2015 JP 2015153702; 01.10.2015 JP 2015196260
(43) Date of publication of application: 08.02.2017
(73) Proprietor: Fuji Xerox Co., Ltd., Minato-ku, Tokyo (JP)
(72) Inventor: NOBUTANI, Naoya, Yokohama-shi, Kanagawa (JP); ONO, Masafumi, Yokohama-shi, Kanagawa (JP); HAYASHI, Manabu, Yokohama-shi, Kanagawa (JP); YAMAMOTO, Kunitoshi, Yokohama-shi, Kanagawa (JP); SUZUKI, Toru, Yokohama-shi, Kanagawa (JP)
(74) Representative: Haseltine Lake Kempner LLP

(56) References cited:
- EP-A2- 2 045 760
- US-A1- 2014 160 505
- US-A1- 2015 043 790
- US-A1- 2015 125 046

## Description

### BACKGROUND

### 1. Technical Field

The present invention relates to an authentication apparatus and a processing apparatus.

### 2. Related Art

As a technique of the related art disclosed in publications, there is a technique in which a first imaging unit is provided so as to be directed forward on the front side in an image forming apparatus, a second imaging unit is provided so as to be directed upward on a user interface 13 provided on an upper part of the image forming apparatus, a main system of the image forming apparatus is returned to a standby mode from a sleep mode if it is determined that a person approaches the image forming apparatus on the basis of an image captured by the first imaging unit, the second imaging unit captures an image of the face of the user standing in front of the image forming apparatus, and an authentication process regarding the person is performed by using an obtained face image (refer to Patent Document 1 (JP-A-2015-11537)).

US2015/125046A1 discloses an information processing device including an image acquirer that acquires a shot image of a user, a registered user information holder that holds face identification data of a registered user, and a face authentication section that detects a face image of a registered user existing in the shot image by using face identification data held in the registered user information holder.

US 2015/043790 A1 and EP 2045760 A2 are further prior art.

### SUMMARY

Here, there may be a method in which an authentication process using a face image is performed before a person reaches an image forming apparatus when the face image of the person present around the image forming apparatus is captured. However, if such a method is employed, it cannot be said that the person present around the image forming apparatus is a person (user) aiming to use the image forming apparatus, and a situation may occur in which a person other than the user is authenticated.

The present invention is directed to prevent a person other than an
authentication target person from being authenticated compared with a case where authentication is instantly started at the time when a face image of a person is captured.

The invention is defined in the independent claims. Optional embodiments are set out in the dependent claims.
[1] An authentication apparatus including: an imaging unit that images a person around the authentication apparatus; an authentication unit that authenticates an individual by using a face image of a person imaged by the imaging unit; and an instruction unit that gives an instruction for starting authentication, in which the authentication unit acquires a face image before an instruction is given by the instruction unit, and performs authentication after the instruction is given by the instruction unit.
[2] It may be the authentication apparatus according to [1], in which the imaging unit captures an image of a person present in a first region, and the instruction unit gives an instruction for starting the authentication in a case where a person is present in a second region which is located inside the first region and is narrower than the first region.
[3] It may be the authentication apparatus according to [1], in which the imaging unit captures an image of a person present in a first region, and the instruction unit gives an instruction for starting the authentication in a case where a person present in the first region stays in the first region for a set period of time or more which is set in advance.
[4] It may be the authentication apparatus according to [1], in which the imaging unit captures an image of a person present in a first region, and the instruction unit gives an instruction for starting the authentication in a case where a person present in the first region approaches the authentication apparatus.
[5] It may be the authentication apparatus according to any one of [1] to [4], in which the instruction unit gives an instruction for starting the authentication in a case where a person satisfies a condition in which the person is estimated to have an intention to use the authentication apparatus.
[6] It may be the authentication apparatus according to [1], further including: a holding unit that holds a face image captured by the imaging unit, in which the holding unit extracts a face image satisfying a predefined condition from a plurality of images captured by the imaging unit and holds the face image.
[7] It may be the authentication apparatus according to [1], further including: a holding unit that holds a face image captured by the imaging unit, in which, in a case where the imaging unit captures face images of a plurality of people, the holding unit holds each of the face images.
[8] It may be the authentication apparatus according to [7], further including: a selection unit that selects a face image used for authentication in a case where the holding unit holds the face images of a plurality of people.
[9] It may be the authentication apparatus according to any one of [6] to [8], in which the holding unit deletes face images other than a face image of a person used for authentication after the authentication unit performs the authentication.
[10] It may be the authentication apparatus according to any one of [1] to [9], further including: a notification unit that performs a notification of whether or not authentication in the authentication unit has been successful.
[11] A processing apparatus including: an imaging unit; a specifying unit that specifies an individual by using a face image captured by the imaging unit; a processing unit that performs different processes for each specified individual; and an instruction unit that gives an instruction for authenticating a person in a case where the person satisfies a condition in which the person is estimated to have an intention to use the processing apparatus, in which the specifying unit has specified an individual before the instruction is given, and the processing unit starts a process corresponding to the specified individual after the instruction is given.

According to [1], it is possible to prevent people other than an authentication target person from being authenticated compared with a case where authentication is instantly started at the time of capturing a face image of a person.

According to [2], it is possible to prevent people other than an authentication target person from being authenticated compared with a case of authenticating a person who is present in the first region and is not present in the second region.

According to [3], it is possible to prevent people other than an authentication target person from being authenticated compared with a case of authenticating a person who stays in the first region for a period of time shorter than a predefined period of time.

According to [4], it is possible to prevent people other than an authentication target person from being authenticated compared with a case of authenticating a person who becomes distant from the authentication apparatus in the first region.

According to [5], it is possible to prevent people other than an authentication target person from being authenticated compared with a case of authenticating a person who does not satisfy a condition in which the person is estimated to have an intention to use the authentication apparatus.

According to [6], it is possible to reduce storage capacity required in the holding unit compared with a case of holding face images including a face image which does not satisfy a predefined condition.

According to [7], it is possible to prevent people other than an authentication target person from being authenticated compared with a case of holding only a face image of a single person.

According to [8], it is possible to prevent people other than an authentication target person from being authenticated compared with a case where a face image is not selected from face images of a plurality of people.

According to [9], it is possible to reduce storage capacity required in the holding unit compared with a case of holding face images including a face image which is not used for authentication.

According to [10], a person who comes close to the authentication apparatus in a state in which authentication has not been completed can be prevented from becoming distant from the authentication apparatus for the purpose of authentication compared with a case where a notification of whether or not authentication has been successful is not performed.

According to [11], it is possible to prevent people other than an authentication target person from being authenticated compared with a case where authentication is instantly started at the time of capturing a face image of a person.

### BRIEF DESCRIPTION OF THE DRAWINGS

Exemplary embodiment(s) of the present invention will be described in detail based on the following figures, wherein
Fig. 1 is a perspective view of an image forming apparatus;
Fig. 2 is a top view of a user interface;
Fig. 3 is a top view for explaining a region in which the presence of a person is detected by the image forming apparatus;
Fig. 4 is a side view for explaining a region in which the presence of a person is detected by the image forming apparatus;
Fig. 5 is a functional block diagram of the image forming apparatus;
Fig. 6 is a flowchart illustrating a flow of a process regarding control of modes of the image forming apparatus;
Fig. 7 is a flowchart illustrating a flow of an authentication procedure in the image forming apparatus;
Fig. 8 is a flowchart illustrating a flow of a face detection and face image acquisition process in the authentication procedure;
Fig. 9 is a flowchart illustrating a flow of a face authentication process in the authentication procedure;
Fig. 10A illustrates an example of a registered table which is registered in the image forming apparatus by a user in advance, and Fig. 10B illustrates an example of a tracking table used for the face detection and face image acquisition process;
Figs. 11A to 11E are diagrams illustrating a first example of a temporal change in a position of a person present around the image forming apparatus;
Figs. 12A to 12D are diagrams illustrating examples of guide screens displayed on the user interface in the face authentication process;
Figs. 13A and 13B are diagrams illustrating examples of a first camera image captured by a first camera;
Figs. 14A and 14B are diagrams illustrating other examples of a first camera image captured by the first camera;
Figs. 15A to 15D are diagrams illustrating a second example of a temporal change in a position of a person present around the image forming apparatus;
Figs. 16A to 16E are diagrams illustrating a third example of a temporal change in a position of a person present around the image forming apparatus;
Figs. 17A to 17E are diagrams illustrating a fourth example of a temporal change in a position of a person present around the image forming apparatus;
Fig. 18 is a flowchart illustrating a flow of an authentication procedure in the image forming apparatus;
Fig. 19 is a flowchart illustrating a flow of a face authentication process in the authentication procedure;
Figs. 20A to 20D are diagrams illustrating a first pattern in the first example of a temporal change in a position of a person present around the image forming apparatus;
Figs. 21A to 21D are diagrams illustrating a second pattern in the first example of a temporal change in a position of a person present around the image forming apparatus;
Figs. 22A to 22D are diagrams illustrating a first pattern in the second example of a temporal change in a position of a person present around the image forming apparatus;
Figs. 23A to 23D are diagrams illustrating a second pattern in the second example of a temporal change in a position of a person present around the image forming apparatus;
Figs. 24A to 24D are diagrams illustrating a first pattern in the third example of a temporal change in a position of a person present around the image forming apparatus; and
Figs. 25A to 25D are diagrams illustrating a second pattern in the third example of a temporal change in a position of a person present around the image forming apparatus.

### DETAILED DESCRIPTION

### [Exemplary Embodiment 1]

Hereinafter, with reference to the accompanying drawings, Exemplary Embodiment 1 of the present invention will be described in detail.

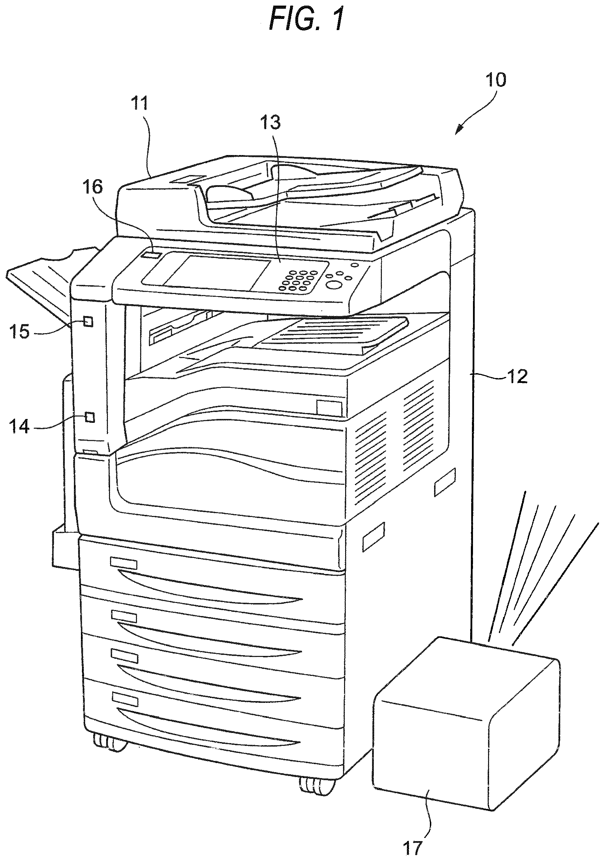

Fig. 1 is a perspective view of an image forming apparatus 10 to which the present embodiment is applied. The image forming apparatus 10 as an example of an authentication apparatus, a processing apparatus, and a display apparatus is a so-called multifunction peripheral having a scanning function, a printing function, a copying function, and a facsimile function.

The image forming apparatus 10 includes a scanner 11, a printer 12, and a user interface (Ul) 13. Among the elements, the scanner 11 is a device reading an image formed on an original, and the printer 12 is a device forming an image on a recording material. The user interface 13 is a device receiving an operation (instruction) from a user and displaying various information to the user when the user uses the image forming apparatus 10.

The scanner 11 of the present embodiment is disposed over the printer 12. The user interface 13 is attached to the scanner 11. Here, the user interface 13 is disposed on the front side in the image forming apparatus 10 (scanner 11) on which the user stands when using the image forming apparatus 10. The user interface 13 is disposed so as to be directed upward so that the user standing on the front side of the image forming apparatus 10 can operate the user interface 13 while viewing a lower side from an upper side.

The image forming apparatus 10 also includes a pyroelectric sensor 14, a first camera 15, and a second camera 16. Among the elements, the pyroelectric sensor 14 and the first camera 15 are respectively attached to the front side and the left side in the printer 12 so as to be directed forward. The first camera 15 is disposed over the pyroelectric sensor 14. The second camera 16 is attached so as to be directed upward on the left side in the user interface 13.

Here, the pyroelectric sensor 14 has a function of detecting movement of a moving object (a person or the like) including the user on the front side of the image forming apparatus 10. The first camera 15 is constituted of a so-called video camera, and has a function of capturing an image of the front side of the image forming apparatus 10. The second camera 16 is also constituted of a so-called video camera, and has a function of capturing an image of the upper side of the image forming apparatus 10. Here, a fish-eye lens is provided in each of the first camera 15 and the second camera 16. Consequently, the first camera 15 and the second camera 16 captures an image at an angle wider than in a case of using a general lens.

The image forming apparatus 10 further includes a projector 17. In this example, the projector 17 is disposed on the right side of the main body of the image forming apparatus 10 when viewed from the front side. The projector 17 projects various screens onto a screen (not illustrated) provided on the back side of the image forming apparatus 10. Here, the screen is not limited to a so-called projection screen, and a wall or the like may be used. An installation position of the projector 17 with respect to the main body of the image forming apparatus 10 may be changed. In this example, the main body of the image forming apparatus 10 and the projector 17 are provided separately from each other, but the main body of the image forming apparatus 10 and the projector 17 may be integrally provided by using a method or the like of attaching the projector 17 to a rear surface side of the scanner 11.

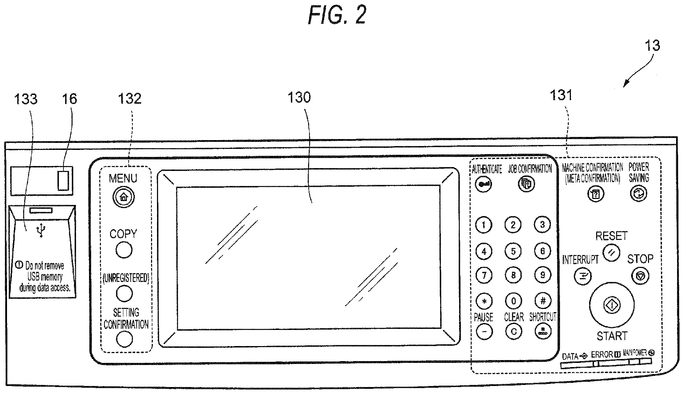

Fig. 2 is a top view of the user interface 13 illustrated in Fig. 1. However, Fig. 2 also illustrates the second camera 16 disposed in the user interface 13.

The user interface 13 includes a touch panel 130, a first operation button group 131, a second operation button group 132, and a USB memory attachment portion 133. Here, the first operation button group 131 is disposed on the right side of the touch panel 130. The second operation button group 132, the USB memory attachment portion 133, and the second camera 16 are disposed on the right side of the touch panel 130.

Here, the touch panel 130 has a function of displaying information using an image to the user, and receiving an input operation from the user. The first operation button group 131 and the second operation button group 132 have a function of receiving an input operation from the user. The USB memory attachment portion 133 allows the user to attach a USB memory thereto.

The second camera 16 provided in the user interface 13 is disposed at a position where an image of the face of the user using the image forming apparatus 10 can be captured. The image (including the image of the face of the user) captured by the second camera 16 is displayed on the touch panel 130. Here, in the image forming apparatus 10 of the present embodiment, as will be described later, authentication for permitting use of the image forming apparatus 10 is performed by using a face image obtained by the first camera 15 capturing a face of a person approaching the image forming apparatus 10. For this reason, a person (user) who intends to use the image forming apparatus 10 is required to register a face image thereof in advance. The second camera 16 in the present embodiment is used to capture the face of the person when such a face image is registered.

In the present embodiment, an image captured by the first camera 15 can be displayed on the touch panel 130. In the following description, an image captured by the first camera 15 will be referred to as a first camera image, and an image captured by the second camera 16 will be referred to as a second camera image.

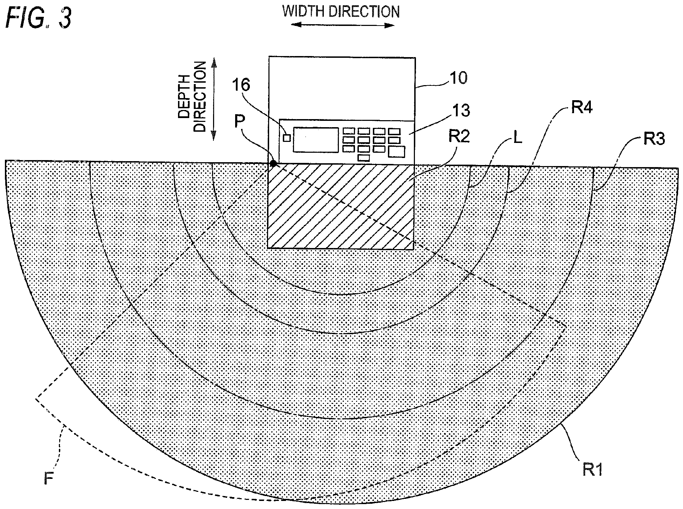

Fig. 3 is a top view diagram for explaining a region in which the presence of a person is detected by the image forming apparatus 10. Fig. 3 is a view obtained when the image forming apparatus 10 and the vicinity thereof are viewed from the top in a height direction of the image forming apparatus 10.

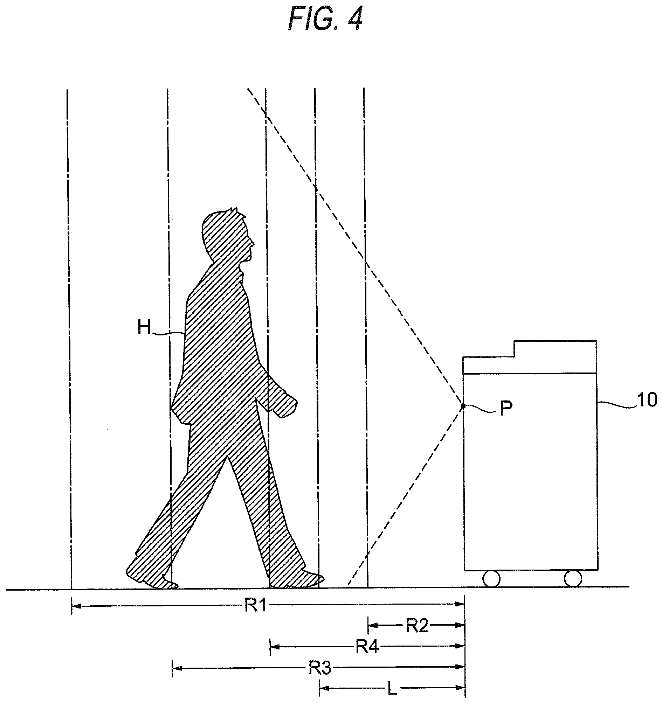

Fig. 4 is a side view diagram for explaining a region in which the presence of a person is detected by the image forming apparatus 10. Fig. 4 is a view obtained when the image forming apparatus 10 and the vicinity thereof are viewed from a lateral side (in this example, the right side when viewed from the front side of the image forming apparatus 10) of the image forming apparatus 10. Fig. 4 also illustrates a person H, but does not illustrate a detection region F illustrated in Fig. 3.

Here, as illustrated in Figs. 3 and 4, the location where the first camera 15 (refer to Fig. 1) is attached in the image forming apparatus 10 is referred to as a position P of the image forming apparatus 10.

In this example, the pyroelectric sensor 14 (refer to Fig. 1) detects the person H present in the detection region F. The detection region F is formed on the front side of the image forming apparatus 10, and exhibits a fan shape whose central angle is set to be lower than 180 degrees when viewed from the top in the height direction.

In this example, by using a result of analyzing the first camera image captured by the first camera 15 (refer to Fig. 1), the person H present in a person detection region R1, a person operation region R2, an entry detection region R3, and an approach detection region R4 is detected.

Among the regions, the person detection region R1 is formed on the front side of the image forming apparatus 10, and exhibits a fan shape whose central angle is set to be lower than 180 degrees when viewed from the top in the height direction. The person detection region R1 is set to include the entire detection region F (not to include a part thereof in this example). A central angle of the person detection region R1 may be set to angles other than 180 degrees. However, the first camera 15 has at least the entire person detection region R1 as an imaging region.

Next, the person operation region R2 is set on the front side of the image forming apparatus 10, and exhibits a rectangular shape when viewed from the top in the height direction. In this example, a length of the rectangular region in a width direction is the same as a length of the image forming apparatus 10 in the width direction. The entire person operation region R2 is located inside the person detection region R1. The person operation region R2 is disposed on a side closer to the image forming apparatus 10 in the person detection region R1.

The entry detection region R3 is formed on the front side of the image forming apparatus 10, and exhibits a fan shape whose central angle is set to 180 degrees when viewed from the top in the height direction. The entire entry detection region R3 is located inside the person detection region R1. The entry detection region R3 is disposed on a side closer to the image forming apparatus 10 in the person detection region R1. The entire person operation region R2 described above is located inside the entry detection region R3. The person operation region R2 is disposed on a side closer to the image forming apparatus 10 in the entry detection region R3.

The approach detection region R4 is formed on the front side of the image forming apparatus 10, and exhibits a fan shape whose central angle is set to 180 degrees when viewed from the top in the height direction. The entire approach detection region R4 is located inside the entry detection region R3. The approach detection region R4 is disposed on a side closer to the image forming apparatus 10 in the entry detection region R3. The entire person operation region R2 described above is located inside the approach detection region R4. The person operation region R2 is disposed on a side closer to the image forming apparatus 10 in the approach detection region R4.

In the image forming apparatus 10 of the present embodiment, as will be described later, authentication for performing use of the image forming apparatus 10 is performed by using a face image obtained by the first camera 15 imaging the face of the person H approaching the image forming apparatus 10. In the image forming apparatus 10, as will be described later, the toes of the person H present in the person detection region R1 are detected, and it is determined whether or not the person H approaches the image forming apparatus 10, by using the first camera image captured by the first camera 15.

Here, a height of the image forming apparatus 10 is typically set to about 1000 mm to 1300 mm for convenience of use, and thus a height of the first camera 15 is about 700 mm to 900 mm from the installation surface. As described above, the toes of the person H are required to be imaged by using the first camera 15, and thus the height of the first camera 15 is restricted to a low position to some extent. For this reason, the height (position P) of the first camera 15 from the installation surface is lower than the height of a face of a general adult (person H) as illustrated in Fig. 4. Thus, in a case where the person H is too close to the image forming apparatus 10, even if a fish-eye lens is used, it is hard for the first camera 15 to image the face of the person H, and, even if the face of the person H is imaged, it is hard to analyze an obtained face image.

Therefore, in this example, a limit of a distance in which a face image of the person H can be analyzed by analyzing the first camera image captured by the first camera 15 is defined as a face detection limit L. The face detection limit L is determined on the basis of a distance in which the face of the person H having a general height can be imaged by the first camera 15. In this example, the face detection limit L is located outside the person operation region R2 and inside the approach detection region R4.

In a case where there is a person H who intends to use the image forming apparatus 10 of the present embodiment, the person H first enters the detection region F. The person H having entered the detection region F successively enters the person detection region R1, and further enters the person operation region R2 from the entry detection region R3 through the approach detection region R4. In this example, the person H who is moving through the person detection region R1 passes through the face detection limit L while entering the person operation region R2 from the approach detection region R4. The person H having entered the person operation region R2 performs an operation using the user interface 13 while staying in the person operation region R2. Each of the person detection region R1, the person operation region R2, the entry detection region R3, and the approach detection region R4 is not necessarily required to be set as illustrated in Fig. 3, and is sufficient if each region can be specified on the basis of the first camera image captured by the first camera 15. The face detection limit L is not required to be set between the person operation region R2 and the approach detection region R4, and may be changed depending on performance or an attachment position (a height of the position P from the installation surface) of the first camera 15.

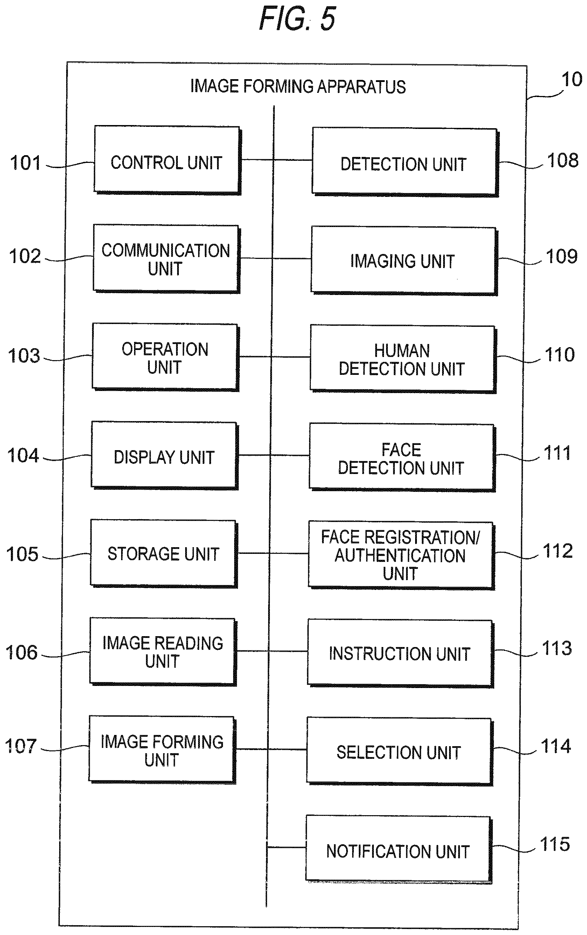

Fig. 5 is a functional block diagram of the image forming apparatus 10. The image forming apparatus 10 of the present embodiment includes a control unit 101, a communication unit 102, an operation unit 103, a display unit 104, a storage unit 105, an image reading unit 106, and an image forming unit 107. The image forming apparatus 10 also includes a detection unit 108, an imaging unit 109, a person detection unit 110, a face detection unit 111, a face registration/authentication unit 112, an instruction unit 113, a selection unit 114, and a notification unit 115.

The control unit 101 includes, for example, a central processing unit (CPU) and a memory, and controls each unit of the image forming apparatus 10. The CPU executes a program stored in the memory or the storage unit 105. The memory includes, for example, a read only memory (ROM) and a random access memory (RAM). The ROM stores a program or data in advance. The RAM temporarily stores the program or data, and is used as a work area when the CPU executes the program.

The communication unit 102 is a communication interface connected to a communication line (not illustrated). The communication unit 102 performs communication with a client apparatus or other image forming apparatuses (none of which are illustrated) via the communication line.

The operation unit 103 inputs information corresponding to a user's operation to the control unit 101. In this example, the operation unit 103 is realized by the touch panel 130, the first operation button group 131, and the second operation button group 132 provided in the user interface 13.

The display unit 104 displays various information to the user. In this example, the display unit 104 is realized by the touch panel 130 provided in the user interface 13.

The storage unit 105 is, for example, a hard disk, and stores various programs or data used by the control unit 101.

The image reading unit 106 reads an image of an original so as to generate image data. In this example, the image reading unit 106 is realized by the scanner 11.

The image forming unit 107 forms an image corresponding to the image data on a sheet-like recording material such as paper. In this case, the image forming unit 107 is realized by the printer 12. The image forming unit 107 may form an image according to an electrophotographic method, and may form an image according to other methods.

The detection unit 108 performs detection of a moving object including the person H. In this example, the detection unit 108 is realized by the pyroelectric sensor 14.

The imaging unit 109 images an imaging target including the person H. In this example, the imaging unit 109 is realized by the first camera 15 and the second camera 16.

The person detection unit 110 analyzes the first camera image captured by the first camera 15 so as to detect the person H present in the person detection region R1, the person operation region R2, the entry detection region R3, and the approach detection region R4.

The face detection unit 111 analyzes the first camera image captured by the first camera 15 so as to detect a face image of the person H present inside the person detection region R1 and outside the face detection limit L.

The face registration/authentication unit 112 performs registration using a face image of a user in advance in relation to the person H (the user) who can use the image forming apparatus 10. Here, in the registration, a face image of the user is captured by using the second camera 16, and a feature amount is extracted from the captured face image. A user's ID (registration ID), various information (referred to as registered person information) set by the user, and the feature amount (referred to as face information) extracted from the face image of the user are correlated with each other and are stored in the storage unit 105. In the following description, a table in which the registration ID, the registered person information, and the face information are correlated with each other will be referred to as a registration table, and a user (person H) registered in the registration table will be referred to as a registered person.

The face registration/authentication unit 112 performs authentication using a face image of a user when the user is to use the image forming apparatus 10. Here, in the authentication, a face image of the person H (user) is captured by using the first camera 15, and a feature amount is also extracted from the captured face image. It is examined whether or not the feature amount obtained through the present imaging matches a feature amount registered in advance, and in a case where there is the matching feature amount (in a case of a registered person who is registered as the user), the image forming apparatus 10 is permitted to be used. In a case where there is no matching feature amount (in a case of an unregistered person who is not registered as the user), the image forming apparatus 10 is prohibited from being used.

The instruction unit 113 outputs an instruction for starting an authentication process using the face image captured by the first camera 15 to the face registration/authentication unit 112.

The selection unit 114 selects one face image among a plurality of face images in a case where the plurality of face images are acquired by using the first camera 15 in relation to the same person H.

The notification unit 115 notifies the person H present in, for example, the person detection region R1, of information which is desired to be provided as necessary. The notification unit 115 is realized by the projector 17.

In the present embodiment, the imaging unit 109 (more specifically, the first camera 15) is an example of an imaging unit, the face registration/authentication unit 112 is an example of an authentication unit, and the storage unit 105 is an example of a holding unit. The face detection unit 111 and the face registration/authentication unit 112 are an example of a specifying unit, and the face registration/authentication unit 112 is an example of a processing unit. A region (a region closer to the image forming apparatus 10) located further inward than the face detection limit L in the person detection region R1 is an example of a set region, and the person detection region R1 is an example of a first region. The entry detection region R3 is an example of a second region, and a region located further outward than the face detection limit L in the person detection region R1 is an example of a third region.

Here, the image forming apparatus 10 of the present embodiment operates depending on one of two modes in which a power consumption amount differs, such as a "normal mode" and a "sleep mode". In a case where the image forming apparatus 10 operates in the normal mode, power required to perform various processes is supplied to each unit of the image forming apparatus 10. On the other hand, in a case where the image forming apparatus 10 operates in the sleep mode, the supply of power to at least some units of the image forming apparatus 10 is stopped, and a power consumption amount of the image forming apparatus 10 becomes smaller than in the normal mode. However, even in a case where the image forming apparatus 10 operates in the sleep mode, power is supplied to the control unit 101, the pyroelectric sensor 14, and the first camera 15, and the above-described elements can operate even in the sleep mode.

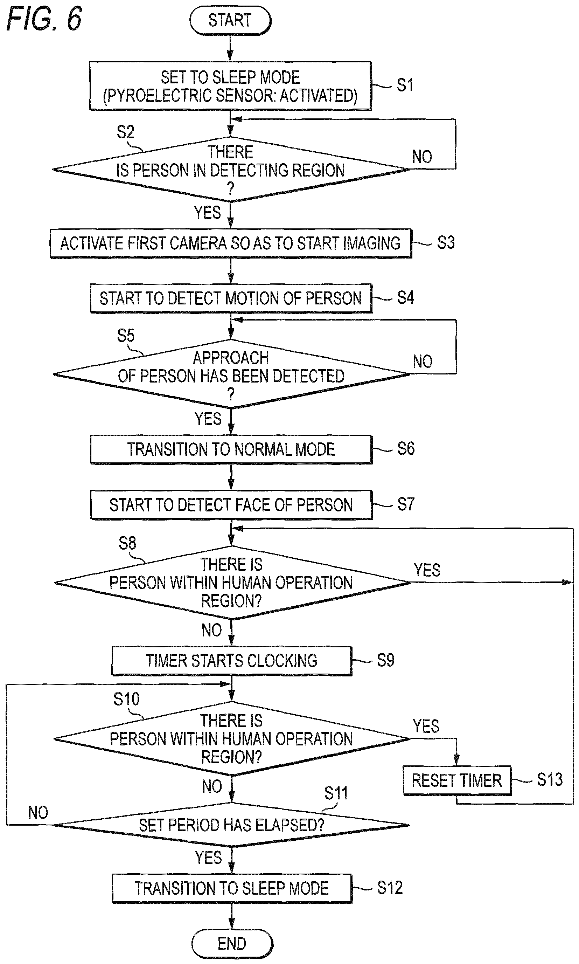

Fig. 6 is a flowchart illustrating a flow of a process regarding control of the modes of the image forming apparatus 10.

In this example, in an initial state, the image forming apparatus 10 is set to the sleep mode (step S1). Even in the sleep mode, the pyroelectric sensor 14 is activated so as to perform an operation. On the other hand, at this time, the first camera 15 is assumed not to be activated. When the image forming apparatus 10 operates in the sleep mode, the control unit 101 monitors a detection result of an amount of infrared rays in the pyroelectric sensor 14 so as to determine whether or not a person H is present in the detection region F (step S2). In a case where a negative determination (NO) is performed in step S2, the flow returns to step S2, and this process is repeatedly performed.

On the other hand, in a case where an affirmative determination (YES) is performed in step S2, that is, the person H is detected in the detection region F, the control unit 101 starts the supply of power to the first camera 15 and also activates the first camera 15 so as to start to image the person detection region R1 (step S3). If imaging is started by the first camera 15, the person detection unit 110 analyzes a first camera image acquired from the first camera 15 and starts a process of detecting motion of the person H (step S4).

In the process of detecting motion of the person H started in step S4, the person detection unit 110 estimates a distance from the image forming apparatus 10 to the person H, and calculates a motion vector indicating motion of the person H. The process of detecting motion of the person H may be performed according to a well-known method, but, for example, the person detection unit 110 estimates a distance from the image forming apparatus 10 to the person H on the basis of a size of a body part detected from a captured image. The person detection unit 110 performs a frame process on the captured image obtained by the first camera 15, and compares captured images corresponding to a plurality of frames with each other in time series order. At this time, the person detection unit 110 detects toes as the body part of the person H, and analyzes motion of the detected part so as to calculate a motion vector. The person detection unit 110 corrects the first camera image (a distorted image obtained using a fish-eye lens) acquired from the first camera 15 to a planar image (develops the first camera image in a plan view) and then detects motion of the person H.

Next, the person detection unit 110 determines whether or not the approach of the person H present in the person detection region R1 to the image forming apparatus 10 has been detected (step S5). For example, in a case where it is determined that the person H is present in the person detection region R1 and moves toward the image forming apparatus 10, the person detection unit 110 performs an affirmative determination (YES) in step S5. In a case where a negative determination (NO) is performed in step S5, the flow returns to step S5, and this process is repeatedly performed.

In contrast, in a case where an affirmative determination (YES) is performed in step S5, the control unit 101 causes a mode of the image forming apparatus 10 to transition from the sleep mode to the normal mode (step S6). At this time, the control unit 101 instructs power corresponding to the normal mode to be supplied to each unit of the image forming apparatus 10 so as to activate each unit of the image forming apparatus 10. In addition, the control unit 101 starts the supply of power to the second camera 16 so as to activate the second camera 16.

In the present embodiment, instant transition from the sleep mode to the normal mode does not occur when the presence of the person H in the person detection region R1 is detected, but transition from the sleep mode to the normal mode occurs when the approach of the person H present in the person detection region R1 to the image forming apparatus 10 is detected. As a result of such control being performed, for example, in a case where the person H just passes through the person detection region R1, an opportunity for the image forming apparatus 10 to transition from the sleep mode to the normal mode is reduced.

If the transition from the sleep mode to the normal mode occurs in step S6, the face detection unit 111 analyzes the first camera image acquired from the first camera 15 and starts a process of detecting the face of the person H present in the person detection region R1 (step S7).

Next, the person detection unit 110 analyzes the first camera image acquired from the first camera 15 so as to determine whether or not the person H is present (stays) in the person operation region R2 (step S8). At this time, the person detection unit 110 analyzes the first camera image from the first camera 15 so as to detect a body part of the person H, and detects the presence of the person H in the person operation region R2 on the basis of a position and a size of the detected part. For example, the person detection unit 110 estimates a distance from the image forming apparatus 10 to the person H on the basis of the size of the detected body part, and specifies a direction in which the person H is present on the basis of the position of the detected body part.

In a case where an affirmative determination (YES) is performed in step S8, the flow returns to step S8, and the process of detecting the face of the person H started in step S7 is continued. Therefore, the person detection unit 110 repeatedly performs the process of detecting the presence of the person H in the person operation region R2 still in the normal mode until the presence of the person H is not detected in the person operation region R2.

On the other hand, in a case where a negative determination (NO) is performed in step S8, that is, the person H is not present in the person operation region R2 (the person H has exited from the person operation region R2), the control unit 101 starts clocking using a timer (step S9). In other words, the control unit 101 measures an elapsed time from the time when the person H is not present in the person operation region R2 with the timer.

Next, the person detection unit 110 determines whether or not the person H is present in the person operation region R2 (step S10). In step S10, the person detection unit 110 determines again whether or not the person H is present in the person operation region R2 after the person H is not present in the person operation region R2.

In a case where a negative determination (NO) is performed in step S10, the control unit 101 determines whether or not a time point measured by the timer has exceeded a set period (step S11). The set period is, for example, one minute, but may be set to a time period other than one minute. In a case where a negative determination (NO) is performed in step S11, the control unit 101 returns to step S10 and continues the process. In steps S10 and S11, it is determined whether or not a period in which the person H is not present in the person operation region R2 lasts for the set period.

In contrast, in a case where an affirmative determination (YES) is performed in step S11, the control unit 101 causes a mode of the image forming apparatus 10 to transition from the normal mode to the sleep mode (step S12). At this time, the control unit 101 instructs power corresponding to the sleep mode to be supplied to each unit of the image forming apparatus 10, and stops an operation of each unit of the image forming apparatus 10 which is stopped during the sleep mode. Thereafter, the control unit 101 stops an operation of the first camera 15 if the pyroelectric sensor 14 does not detect the presence of the person H in the detection region F.

Here, a case is assumed in which the presence of the person H is detected again in the person operation region R2 before the set period elapses from the time when the person H is not present in the person operation region R2 after the timer starts clocking in step S9. In this case, the control unit 101 performs an affirmative determination (YES) in step S10 and also stops clocking of the timer so as to reset the timer (step S13). The control unit 101 returns to step S8 and continues the process. In other words, the process performed in a case where the person H is present in the person operation region R2 is performed again. Herein, a case where the same person H returns to the person operation region R2 is exemplified, but also in a case where another person H moves into the person operation region R2, the person detection unit 110 performs an affirmative determination (YES) in step S10.

Here, in the related art, a person H (user) who intends to use the image forming apparatus 10 gives an instruction for capturing a face image and requests authentication for himself/herself in a case of performing the authentication using the face image of the user. For example, the person H stands in the person operation region R2, and causes a face image to be captured in a state in which the user's face is directed toward the second camera 16 provided in the user interface 13. In contrast, in the image forming apparatus 10 of the present embodiment, a face image of the person H present in the person detection region R1 is captured by the first camera 15 in advance, and an authentication process is performed by using the captured face image of the person H in a state in which a specific condition is satisfied.

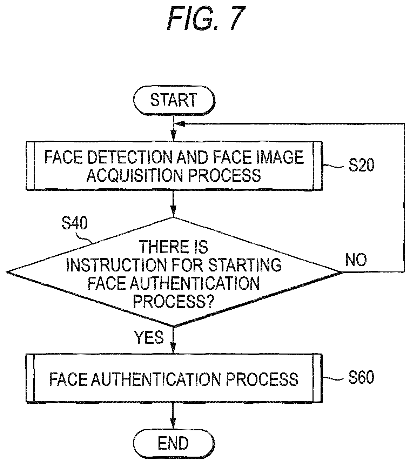

Fig. 7 is a flowchart illustrating a flow of an authentication procedure in the image forming apparatus 10. The process illustrated in Fig. 7 is performed in a state in which the image forming apparatus 10 is set to the normal mode.

If the image forming apparatus 10 is set to the normal mode, as shown in step S7 of Fig. 6, the first camera image acquired from the first camera 15 is analyzed, and the process of detecting the face of the person H present in the person detection region R1 is started. Along therewith, the face detection unit 111 performs a face detection and face image acquisition process of detecting the face of the person H from the first camera image and acquiring a detected face image (step S20). The face registration/authentication unit 112 determines whether or not there is an instruction for starting a face authentication process from the instruction unit 113 (step S40). In a case where a negative determination (NO) is performed in step S40, the flow returns to step S20, and the process is continued.

On the other hand, in a case where an affirmative determination (YES) is performed in step S40, the face registration/authentication unit 112 performs a face authentication process of setting whether or not authentication is successful by using a result of the face detection and face image acquisition process in step S20, that is, the face image of the person H obtained from the first camera image which is acquired from the first camera 15 (step S60), and completes the process.

In Fig. 7, step S40 is executed after step S20 is executed, but, actually, step S20 and step S40 are executed in parallel. Therefore, in a case where an affirmative determination (YES) is performed in step S40 during execution of the process in step S20, that is, there is an instruction for starting the authentication process, the process in step S20 is stopped, and the flow proceeds to step S60.

Each of the face detection and face image acquisition process in the above step S20 and the face authentication process in the above step S60 will be described in more detail.

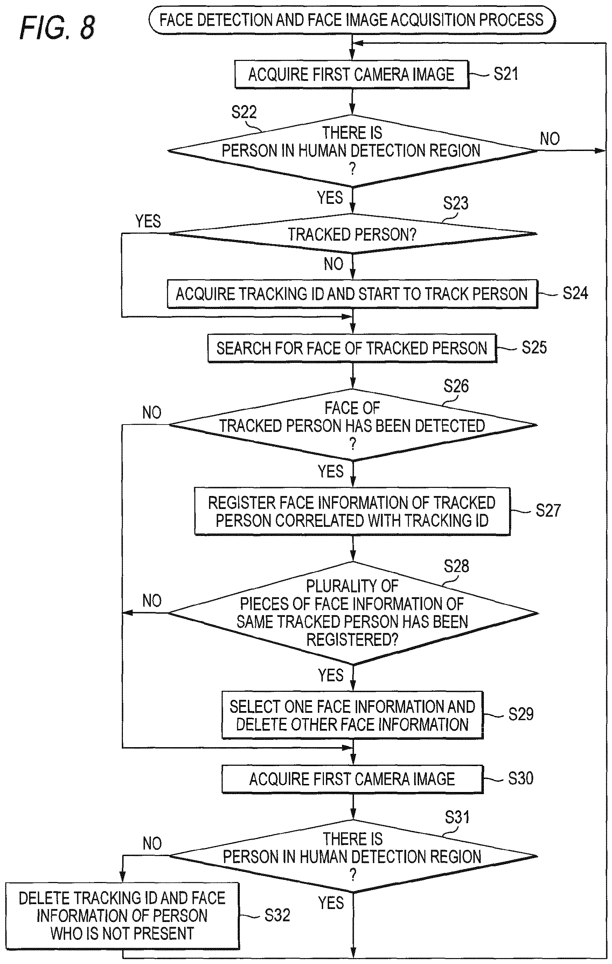

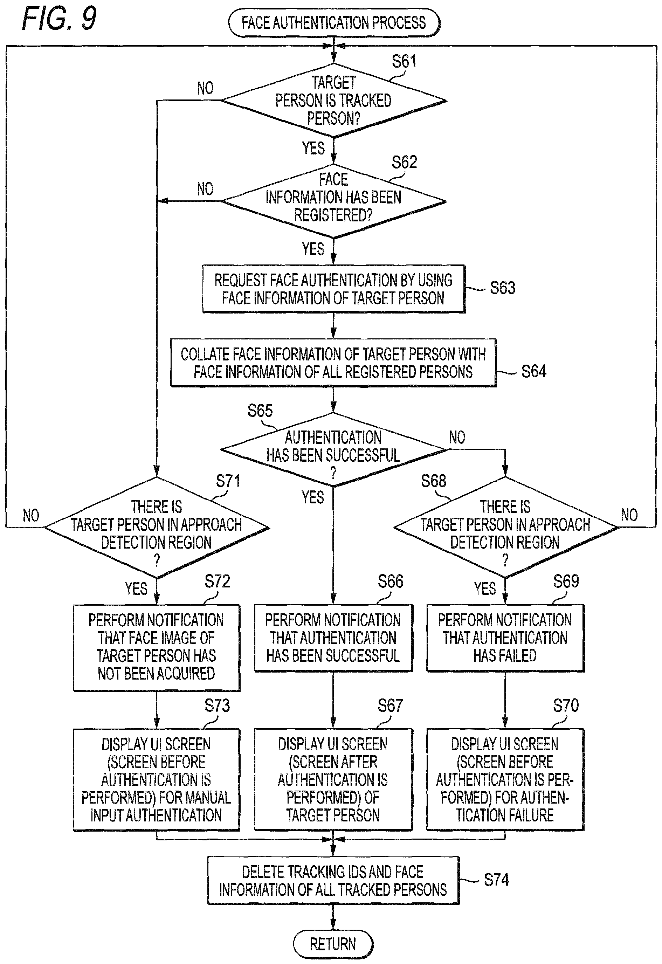

Fig. 8 is a flowchart illustrating a flow of the face detection and face image acquisition process (step S20) in the authentication procedure of the present embodiment. Fig. 9 is a flowchart illustrating a flow of the authentication process (step S60) in the authentication procedure of the present embodiment.

First, with reference to Fig. 8, a description will be made of the content of the face detection and face image acquisition process in step S20.

Herein, first, the person detection unit 110 and the face detection unit 111 acquire a first camera image captured by the first camera 15 (step S21). Next, the person detection unit 110 analyzes the first camera image acquired in step S21 so as to determine whether or not a person H is present in the person detection region R1 (step S22). In a case where a negative determination (NO) is performed in step S22, the flow returns to step S21, and the process is continued.

On the other hand, in a case where an affirmative determination (YES) is performed in step S22, the person detection unit 110 determines whether or not the person H whose presence has been detected in step S22 is in a state in which the presence has already been detected and is a tracked person (step S23). In a case where an affirmative determination (YES) is performed in step S23, the flow proceeds to step S25 to be described later.

In contrast, in a case where a negative determination (NO) is performed in step S23, the person detection unit 110 acquires a tracking ID for the person H whose presence has been detected in step S22 and stores the tracking ID in the storage unit 105, and starts tracking of the person H (step S24). The face detection unit 111 analyzes the first camera image acquired in step S21 so as to search for a face of the tracked person (step S25).

Next, the face detection unit 111 determines whether or not the face of the tracked person has been detected from the first camera image (step S26). In a case where a negative determination (NO) is performed in step S26, the flow proceeds to step S30 to be described later.

On the other hand, in a case where an affirmative determination (YES) is performed in step S26, the face detection unit 111 registers face information extracted from the face image of the tracked person in the storage unit 105 in correlation with the tracking ID of the tracked person (step S27). In the following description, a table in which the tracking ID is correlated with the face information will be referred to as a tracking table. The face detection unit 111 determines whether or not face information of the same tracked person is registered in the tracking table in plural (in this example, two) in relation to the tracked person (step S28). In a case where a negative determination (NO) is performed in step S28, the flow proceeds to step S30 to be described later.

In contrast, in a case where an affirmative determination (YES) is performed in step S28, the selection unit 114 selects one of the two face information pieces registered as the tracking table in the storage unit 105, and deletes the other face information which is not selected from the storage unit 105 (step S29).

The person detection unit 110 acquires the first camera image captured by the first camera 15 (step S30). Next, the person detection unit 110 analyzes the first camera image acquired in step S30 so as to determine whether or not the tracked person is present in the person detection region R1 (step S31). In a case where an affirmative determination (YES) is performed in step S31, the flow returns to step S21, and the process is continued.

On the other hand, in a case where a negative determination (NO) is performed in step S31, the person detection unit 110 deletes the tracking ID and the face information of the tracked person (person H) whose presence is not detected in step S31 from the tracking table (step S32), returns to step S21, and continues the process.

Next, with reference to Fig. 9, a description will be made of the content of the face authentication process in step S60.

Herein, first, the selection unit 114 selects a person H (target person) who is a target on which the instruction for the face authentication process is given in step S40 illustrated in Fig. 7, and the face registration/authentication unit 112 determines whether or not the target person is a tracked person registered in the tracking table (step S61). In a case where a negative determination (NO) is performed in step S61, the flow proceeds to step S71 to be described later.

In contrast, in a case where an affirmative determination (YES) is performed in step S61, the face registration/authentication unit 112 determines whether or not face information of the same tracked person as the target person is registered in the storage unit 105 (step S62). In a case where a negative determination (NO) is performed in step S62, the flow proceeds to step S71 to be described later.

On the other hand, in a case where an affirmative determination (YES) is performed in step S62, the face registration/authentication unit 112 makes a request for face authentication by using face information of the target person whose registration in the tracking table is confirmed in step S62 (step S63). Next, the face registration/authentication unit 112 collates the face information of the target person with face information pieces of all registered persons registered in the registration table (step S64). The face registration/authentication unit 112 determines whether or not authentication has been successful (step S65). Here, in step S65, an affirmative determination (YES) is performed if the face information of the target person matches any one of the face information pieces of all the registered persons, and a negative determination (NO) is performed if the face information of the target person does not match any one of the face information pieces of all the registered persons.

In a case where an affirmative determination (YES) is performed in step S65, the notification unit 115 notifies the target person or the like that the authentication has been successful by using the projector 17 (step S66). The display unit 104 displays a UI screen (a screen after authentication is performed) for the target person which is set for the authenticated target person (step S67), and proceeds to step S74 to be described later.

On the other hand, in a case where a negative determination (NO) is performed in step S65, the person detection unit 110 determines whether or not a target person is present in the approach detection region R4 (step S68). In a case where a negative determination (NO) is performed in step S68, the flow returns to step S61, and the process is continued.

In contrast, in a case where an affirmative determination (YES) is performed in step S68, the notification unit 115 notifies the target person or the like that authentication has failed by using the projector 17 (step S69). The display unit 104 displays a UI screen (a screen before authentication is performed) corresponding to an authentication failure which is set for authentication failure (step S70), and proceeds to step S74 to be described later.

On the other hand, in a case where a negative determination (NO) is performed in step S61 and in a case where a negative determination (NO) is performed in step S62, the person detection unit 110 determines whether or not a target person is present in the approach detection region R4 (step S71). In a case where a negative determination (NO) is performed in step S71, the flow returns to step S61, and the process is continued.

In contrast, in a case where an affirmative determination (YES) is performed in step S71, the notification unit 115 notifies the target person or the like that a face image of the target person has not been acquired by using the projector 17 (step S72). The display unit 104 displays a Ul screen (a screen before authentication is performed) corresponding to manual input authentication which is set for an authentication process using manual inputting (step S73), and proceeds to step S74 to be described later.

The face registration/authentication unit 112 deletes tracking IDs and face information pieces of all tracked persons registered in the tracking table (step S74), and completes the process.

Next, the present embodiment will be described in more detail by using specific examples.

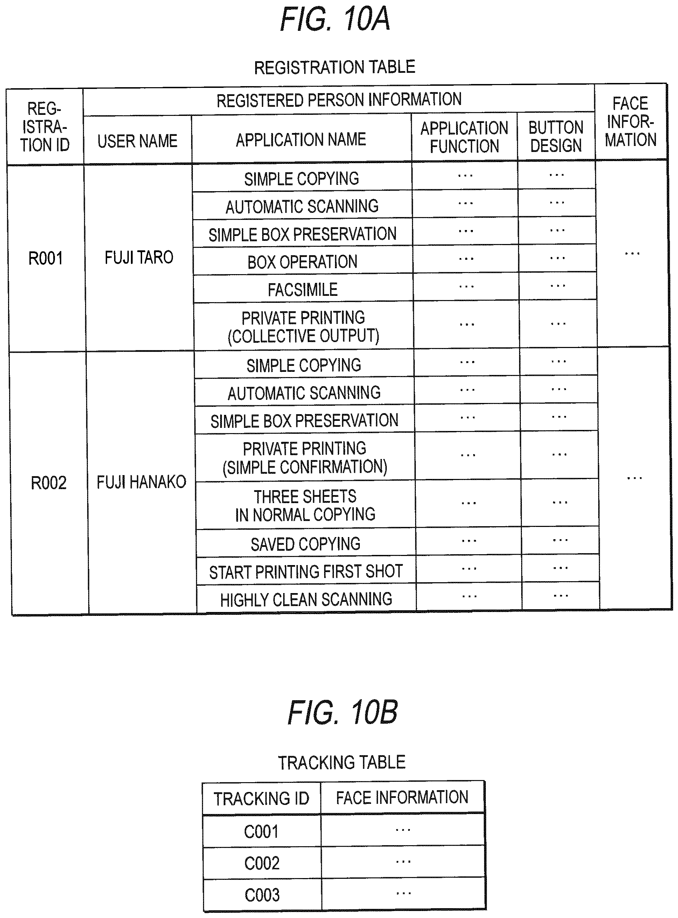

Fig. 10A is a diagram illustrating an example of a registration table which is registered in the image forming apparatus 10 by a user, and Fig. 10B is a diagram illustrating an example of a tracking table used for the face detection and face image acquisition process in step S20. The registration table and the tracking table are stored in the storage unit 105.

First, a description will be made of the registration table illustrated in Fig. 10A.

In the registration table illustrated in Fig. 10A, as described above, a registration ID given to a user, registered person information set by the user, and face information extracted from a face image of the user are correlated with each other. Among the elements, the registered person information includes a user name which is given to the user for himself/herself, an application name used in a UI screen for the user, an application function corresponding to the application name, and button design corresponding to the application name.

In the registration table illustrated in Fig. 10A, two persons H (registration IDs "R001" and "R002") are registered as users (registered persons). Herein, a case where the two persons H are registered as users is exemplified, but a single person or three or more people may be registered.

Of the two persons, the registered person information is registered as follows in relation to the user having the registration ID "R001". First, "Fujitaro" is registered as the user name, and "simple copying", "automatic scanning", "simple box preservation", "simple box operation", "facsimile", and "private printing (collective output)" are registered as application names. An application function and button design corresponding to each application name are also registered. Face information regarding the user having the registration ID "R001" is also registered.

The registered person information is registered as follows in relation to the user having the registration ID "R002". First, "Fuji Hanako" is registered as the user name, and "simple copying", "automatic scanning", "simple box preservation", "private printing (simple confirmation)", "three sheets in normal printing", "saved copying", "start printing first shot", and "highly clean scanning" are registered as application names. An application function and button design corresponding to each application name are also registered. Face information regarding the user having the registration ID "R002" is also registered.

Next, the tracking table illustrated in Fig. 10B will be described.

In the tracking table illustrated in Fig. 10B, as described above, a tracking ID given to a tracked person who is a person H during tracking in the person detection region R1 is correlated with face information extracted from a face image of the tracked person. In the face detection and face image acquisition process in step S20, in a case where a tracking ID is set for a tracked person but a face of the tracked person cannot be detected, a situation may occur in which the tracking ID is present in the tracking table but face information correlated with the tracking ID is not present.

Three persons H (tracking IDs "C001" to "C003") are registered as tracked persons in the tracking table illustrated in Fig. 10B. Herein, a case where the three persons H are registered as tracked persons is exemplified, but two or less persons or four or more persons may be registered.

A description will be made of the instruction for starting the face authentication process, shown in step S40 of Fig. 7.

In the present embodiment, in a case where it is detected that a specific (single) person H performs an action satisfying a specific condition among one or more persons H present in the person detection region R1 on the basis of an analysis result of the first camera image captured by the first camera 15, the instruction unit 113 outputs an instruction for starting the authentication process in step S60.

### [First example]

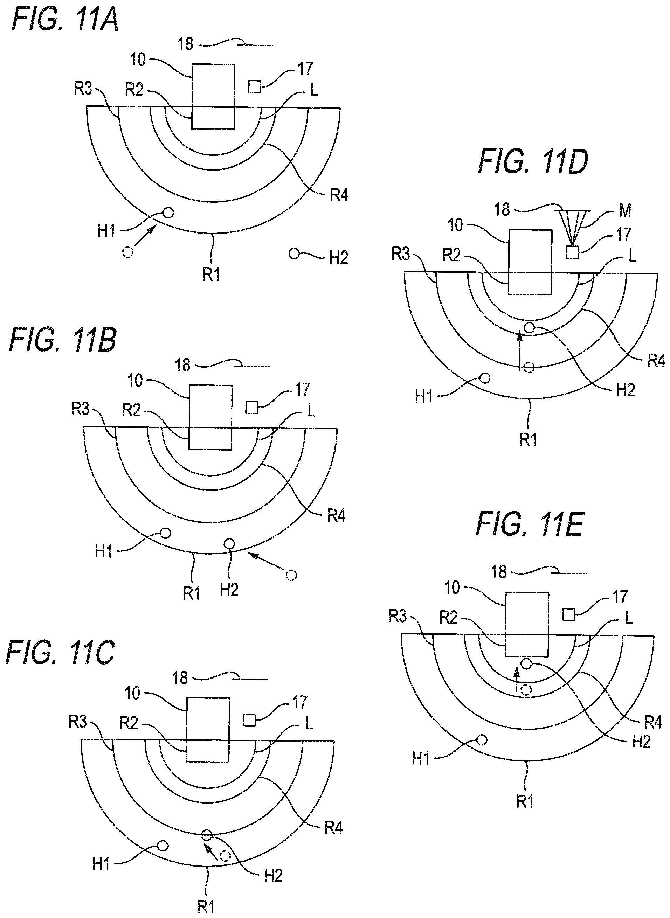

Figs. 11A to 11E illustrate a first example of a temporal change in a position of a person H around the image forming apparatus 10. Here, Figs. 11A to 11E exemplify a case where any one of persons H present in the person detection region R1 entering the entry detection region R3 from the person detection region R1 is used as the instruction for starting the authentication process in step S40.

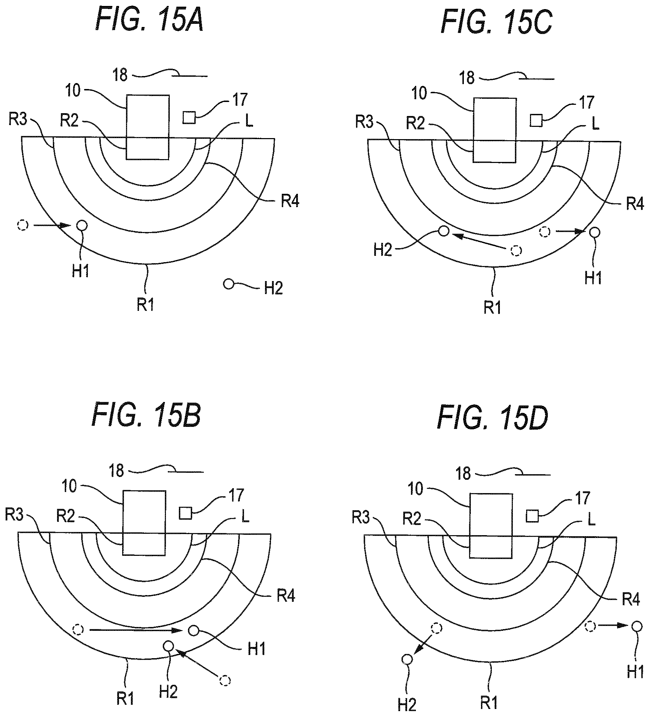

In Figs. 11A to 11E (first example) described below and Figs. 15A to 17E (a second example to a fourth example) described next, a case is exemplified in which two persons including a first person H1 and a second person H2 are present around the image forming apparatus 10 as persons H. Figs. 11A to 11E described below and Figs. 15A to 17E described next illustrate a screen 18 onto which an image is projected by the projector 17.

Fig. 11A illustrates a state in which the first person H1 enters the person detection region R1 from the outside of the person detection region R1, and the second person H2 is located outside the person detection region R1. In this case, in relation to the first person H1, an affirmative determination (YES) is performed in step S22, and a negative determination (NO) is performed in step S23, so that a tracking ID is given to the first person H1 and tracking is started in step S24, and thus a face of the first person H1 is searched for in step S25. In this case, since the second person H2 is present outside the person detection region R1, the second person H2 is not a target of the process.

Fig. 11B illustrates a state in which the first person H1 is still present in the person detection region R1, and the second person H2 enters the person detection region R1 from the outside of the person detection region R1. At this time, a negative determination (NO) is performed in step S23 in relation to the first person H1, and, the face of the first person H1 is continuously searched for. In addition, at this time, in relation to the second person H2, an affirmative determination (YES) is performed in step S22, and a negative determination (NO) is performed in step S23, so that a tracking ID is given to the second person H2 and tracking is started in step S24, and thus a face of the second person H2 is searched for in step S25.

Fig. 11C illustrates a state in which the first person H1 is still present in the person detection region R1, and the second person H2 enters the entry detection region R3 from the person detection region R1. In the first example illustrated in Fig. 11C, in a case where a specific person H (the second person H2 in this example) enters the entry detection region R3 from the person detection region R1, the instruction unit 113 outputs the instruction for starting the authentication process, and thus an affirmative determination (YES) is performed in step S40 so that the authentication process in step S60 is started. Therefore, in this example, the selection unit 114 selects the second person H2 as a target person of the two tracked persons (the first person H1 and the second person H2).

Here, in the first example, after the specific person H (the second person H2 in this example) enters the entry detection region R3 from the person detection region R1 and is thus selected as a tracked person, the tracked person is not changed from the specific person H to another person H even if another person H (the first person H1 in this example) enters the entry detection region R3 from the person detection region R1 in a state in which the specific person H continues to stay in the entry detection region R3.

Fig. 11D illustrates a state in which the first person H1 is still present in the person detection region R1, and before the second person H2 passes through the face detection limit L in the approach detection region R4. In this example, the respective processes in steps S61 to S65 are completed before the tracked person (herein, the second person H2) having entered the entry detection region R3 passes through the face detection limit L. In this example, the notification in step S66, S69, or S72 is performed before the tracked person (herein, the second person H2) having entered the entry detection region R3 passes through the face detection limit L. Along therewith, the projector 17 displays a message M on the screen 18. Here, in a case where an affirmative determination (YES) is performed in steps S61 and S62 and then an affirmative determination (YES) is performed in step S65, the projector 17 displays a text image, for example, "authentication has been successful" as the message M in step S66. in a case where an affirmative determination (YES) is performed in steps S61 and S62 and then a negative determination (NO) is performed in step S65, the projector 17 displays a text image, for example, "authentication has failed" or "you are not registered as a user" as the message M in step S69. In a case where a negative determination (NO) is performed in step S61 or S62, the projector 17 displays a text image, for example, "a face image cannot be acquired" in step S72.

In a case where authentication has been successful in the above-described way, the second person H2 as the target person comes close to the image forming apparatus 10. In a case where authentication has failed or a face image cannot be acquired, the second person H2 as the tracked person finds that authentication has not been successful before passing through the face detection limit L in which it is hard to acquire a face image using the first camera 15.

Herein, a case where information that "a face image cannot be acquired" is presented in step S72 has been described, but presented information is not limited thereto. For example, in step S72, a notification that the person H is requested not to come close to an apparatus (the image forming apparatus 10), a notification that the person H is requested not to come close to an apparatus (the image forming apparatus 10) since face authentication of the person H is not completed, a notification that the person H is requested to stop, a notification that the person H is requested to stop since face authentication of the person H is not completed, a notification for informing that a facial part of the person H is deviated from an imaging region of the first camera 15, and the like may be performed.

Fig. 11E illustrates a state in which the first person H1 is still present in the person detection region R1, and before the second person H2 enters the person operation region R2 in the approach detection region R4. In this example, the projector 17 finishes a notification of the message M during transition from the state illustrated in Fig. 11D to the state illustrated in Fig. 11E. In this example, display in step S67, S70 or S73 is performed before the target person (here, the second person H2) having entered the entry detection region R3 enters the person operation region R2.

In the above-described manner, in a state in which the second person H2 as the target person having undergone the face authentication process enters the person operation region R2 and stands in front of the user interface 13, a Ul screen corresponding to the second person H2 is already displayed on the touch panel 130.

Here, a description will be made of the Ul screen displayed on the touch panel 130 in steps S67, S70 and S73.

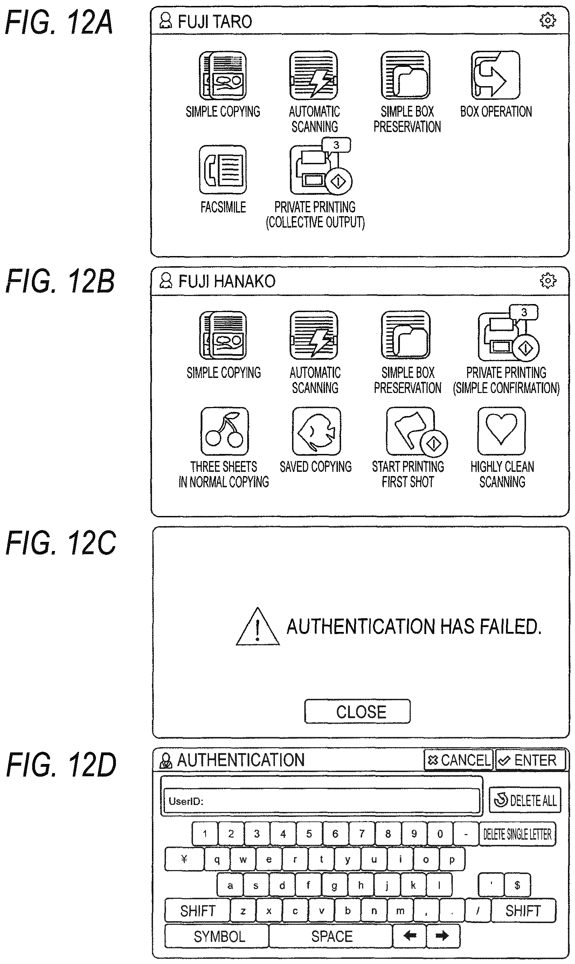

Figs. 12A to 12D are diagrams illustrating examples of UI screens displayed on the user interface 13 (more specifically, the touch panel 130) in the face authentication process illustrated in Fig. 9. Here, Figs. 12A and 12B illustrate examples of the Ul screens (the screens after authentication is performed) related to the target person displayed on the touch panel 130 in step S67 illustrated in Fig. 9. Fig. 12C illustrates an example of the Ul screen (the screen before authentication is performed) corresponding to an authentication failure, displayed on the touch panel 130 in step S70 illustrated in Fig. 9. Fig. 12D illustrates an example of the UI screen (the screen before authentication is performed) corresponding to manual input authentication, displayed on the touch panel 130 in step S73 illustrated in Fig. 9.

First, in a case where a target person is "Fujitaro" as a registered person who is registered in the registration table (refer to Fig. 10A), "Fujitaro" is registered as a tracked person in the tracking table (refer to Fig. 10B) (YES in step S61), face information of "Fujitaro" is registered in the tracking table (YES in step S62), and authentication has been successful (YES) in step S65, the UI screen illustrated in Fig. 12A is displayed in step S67. The user name and the respective application buttons (six buttons in this example) are displayed on the Ul screen according to the registration table for "Fujitaro" illustrated in Fig. 10A. In the touch panel 130, any one of the buttons is pressed, and thus an application function corresponding to the button is executed.

Next, in a case where a target person is "Fuji Hanako" as a registered person who is registered in the registration table (refer to Fig. 10A), "Fuji Hanako" is registered as a tracked person in the tracking table (refer to Fig. 10B) (YES in step S61), face information of "Fuji Hanako" is registered in the tracking table (YES in step S62), and authentication has been successful (YES) in step S65, the UI screen illustrated in Fig. 12B is displayed in step S67. The user name and the respective application buttons (eight buttons in this example) are displayed on the Ul screen according to the registration table for "Fuji Hanako" illustrated in Fig. 10A. In the touch panel 130, any one of the buttons is pressed, and thus an application function corresponding to the button is executed.

Next, in a case where a target person is an unregistered person (for example, "Fujijirou") who is not registered in the registration table (refer to Fig. 10A), "Fujijirou" is registered as a tracked person in the tracking table (refer to Fig. 10B) (YES in step S61), face information of "Fujijirou" is registered in the tracking table (YES in step S62), and authentication has failed (NO) in step S65, the UI screen illustrated in Fig. 12C is displayed in step S70. For example, the text that "authentication has failed" and a "close" button are displayed on the UI screen.

Finally, in a case where a target person is a registered person (who is herein "Fujitaro" but may be "Fuji Hanako") who is registered in the registration table (refer to Fig. 10A), and "Fujitaro" is not registered as a tracked person in the tracking table (refer to Fig. 10B) (NO in step S61), the UI screen illustrated in Fig. 12D is displayed in step S73. In a case where a target person is a registered person (who is herein "Fujitaro" but may be "Fuji Hanako") who is registered in the registration table (refer to Fig. 10A), "Fujitaro" is registered as a tracked person in the tracking table (refer to Fig. 10B) (YES in step S61), and face information of "Fujitaro" is not registered in the tracking table (NO in step S62), the UI screen illustrated in Fig. 12D is displayed in step S73. In a case where a target person is an unregistered person (for example, "Fujijirou") who is not registered in the registration table (refer to Fig. 10A), and "Fujijirou" is not registered as a tracked person in the tracking table (NO in step S61), the UI screen illustrated in Fig. 12D is displayed in step S73. In a case where a target person is an unregistered person (for example, "Fujijirou") who is not registered in the registration table (refer to Fig. 10A), "Fujijirou" is registered as a tracked person in the tracking table (refer to Fig. 10B) (YES in step S61), and face information of "Fujijirou" is not registered in the tracking table (NO in step S62), the UI screen illustrated in Fig. 12D is displayed in step S73. The UI screen is displayed so as to receive an authentication request through a user's manual input. A virtual keyboard, a display region in which the content (a user ID or a password) which is input by using the virtual keyboard is displayed, a "cancel" button, and an "enter" button are displayed on the UI screen.

As mentioned above, in the present embodiment, the content of the screens after authentication is performed (when authentication is successful), illustrated in Figs. 12A and 12B, the content of the screen before authentication is performed (when authentication fails), illustrated in Fig. 12C, and the content of the screen before authentication is performed (when authentication is not possible) corresponding to manual input, illustrated in Fig. 12D, are different from each other. In the present embodiment, as illustrated in Figs. 12A and 12B, the content of the screen after authentication is performed differs for each registered person.

Here, a brief description will be made of cases where a face image of a tracked person can be detected and cannot be detected.

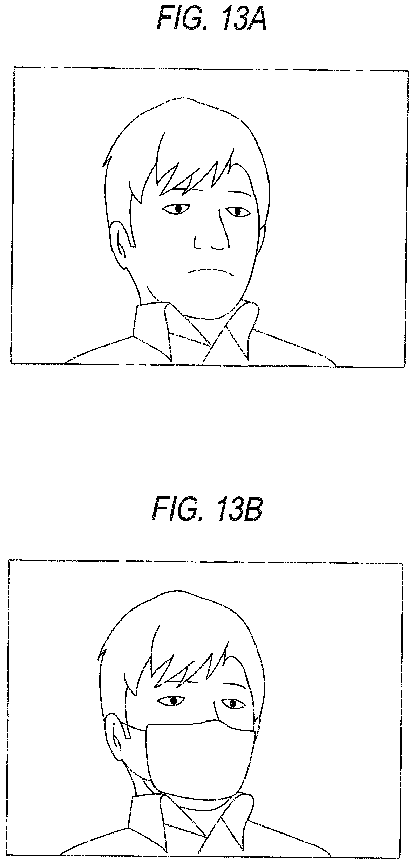

Figs. 13A and 13B illustrate examples of first camera images captured by the first camera 15. Here, Fig. 13A illustrates a first camera image obtained by imaging a face of a person H who does not wear a mask, and Fig. 13B illustrates a first camera image obtained by imaging a face of a person H who wears a mask.

The face registration/authentication unit 112 of the present embodiment detects feature points at a plurality of facial parts (for example, 14 or more parts) such as the eyes, the nose, and the mouth in the face registration and face authentication, and extracts a feature amount of the face after correcting a size, a direction, and the like of the face in a three-dimensional manner. For this reason, in a case where the person H wears a mask or sunglasses so as to cover a part of the face, even if an image including the face of the person H is included in the first camera image, detection of feature points of the face and extraction of a feature point cannot be performed from the first camera image. Also in a case where the person H faces straight sideways or backward with respect to the first camera 15, detection of feature points of the face and extraction of a feature point cannot be performed from the first camera image. In such cases, a negative determination (NO) is performed in step S26 illustrated in Fig. 8.

Next, a brief description will be made of a method of selecting one face information piece in a case where a plurality of face information pieces are acquired in relation to the same tracked person.

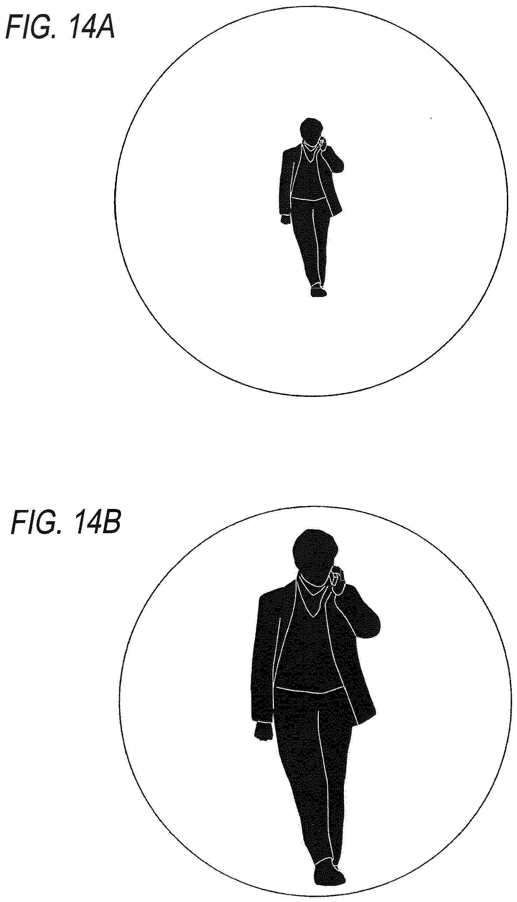

Figs. 14A and 14B illustrate examples of first camera images captured by the first camera 15. Here, Fig. 14A illustrates a first camera image obtained by imaging a person H present at a position which is relatively far from the face detection limit L in the person detection region R1, and Fig. 14B illustrates a first camera image obtained by imaging a person H present at a position which is relatively close to the face detection limit L in the person detection region R1.

As is clear from Figs. 14A and 14B, the face image illustrated in Fig. 14B is larger (the number of pixels is larger) than the face image illustrated in Fig. 14A as the person H comes closer to the first camera 15, and thus it becomes easier to extract a feature amount. Thus, for example, in a case where face information of the person H is acquired from the first camera image illustrated in Fig. 14A and is registered in the tracking table, and then face information of the person H is acquired from the first camera image illustrated in Fig. 14B, the latter face information is selected and the former face information is deleted in step S29.

In addition, for example, in a case where face information of the person H is acquired from a first camera image obtained by imaging a face of a person H obliquely facing the first camera 15 and is registered in the tracking table, and then face information of the person H is acquired from a first camera image obtained by imaging the face of the person H facing the front of the first camera 15, the latter face information may be selected and the former face information may be deleted in step S29.

In the above-described first example, a description has been made of a case where the second person H2 enters the entry detection region R3 earlier than the first person H1, and thus the second person H2 becomes a target person. However, in a case where the first person H1 enters the entry detection region R3 earlier than the second person H2, the first person H1 becomes a target person.

### [Second example]

Figs. 15A to 15D illustrate a second example of a temporal change in a position of a person H around the image forming apparatus 10. Here, in the same manner as in the first example illustrated in Figs. 11A to 11E, Figs. 15A to 15D exemplifies a case where any one of persons H present in the person detection region R1 entering the entry detection region R3 from the person detection region R1 is used as the instruction for starting the authentication process in step S40.

Fig. 15A illustrates a state in which the first person H1 enters the person detection region R1 from the outside of the person detection region R1, and the second person H2 is located outside the person detection region R1. In this case, in relation to the first person H1, an affirmative determination (YES) is performed in step S22, and a negative determination (NO) is performed in step S23, so that a tracking ID is given to the first person H1 and tracking is started in step S24, and thus a face of the first person H1 is searched for in step S25. At this time, since the second person H2 is present outside the person detection region R1, the second person H2 is not a target of the process.

Fig. 15B illustrates a state in which the first person H1 moves in the person detection region R1, and the second person H2 enters the person detection region R1 from the outside of the person detection region R1. At this time, a negative determination (NO) is performed in step S23 in relation to the first person H1, and the face of the first person H1 is continuously searched for. In addition, at this time, in relation to the second person H2, an affirmative determination (YES) is performed in step S22, and a negative determination (NO) is performed in step S23, so that a tracking ID is given to the second person H2 and tracking is started in step S24, and thus a face of the second person H2 is searched for in step S25.

Fig. 15C illustrates a state in which the first person H1 moves from the inside of the person detection region R1 to the outside of the person detection region R1, and the second person H2 moves in the person detection region R1. At this time, in relation to the first person H1, a negative determination (NO) is performed in step S31, and thus a tracking ID and face information regarding the first person H1 are deleted from the tracking table in step S32. At this time, in relation to the second person H2, a negative determination (NO) is performed in step S23, and the face of the second person H2 is continuously searched for.

Fig. 15D illustrates a state in which the first person H1 moves outside the person detection region R1, and the second person H2 moves from the inside of the person detection region R1 to the outside of the person detection region R1. At this time, in relation to the second person H2, a negative determination (NO) is performed in step S31, and thus a tracking ID and face information regarding the second person H2 are deleted from the tracking table in step S32. At this time, the first person H1 is present outside the person detection region R1, and thus the first person H1 is not a target of the process.

In the above-described way, unless the first person H1 or the second person H2 who is being tracked in the person detection region R1 enters the entry detection region R3, a target person is not generated, and, as a result, the face authentication process in step S60 is not started.

### [Third example]

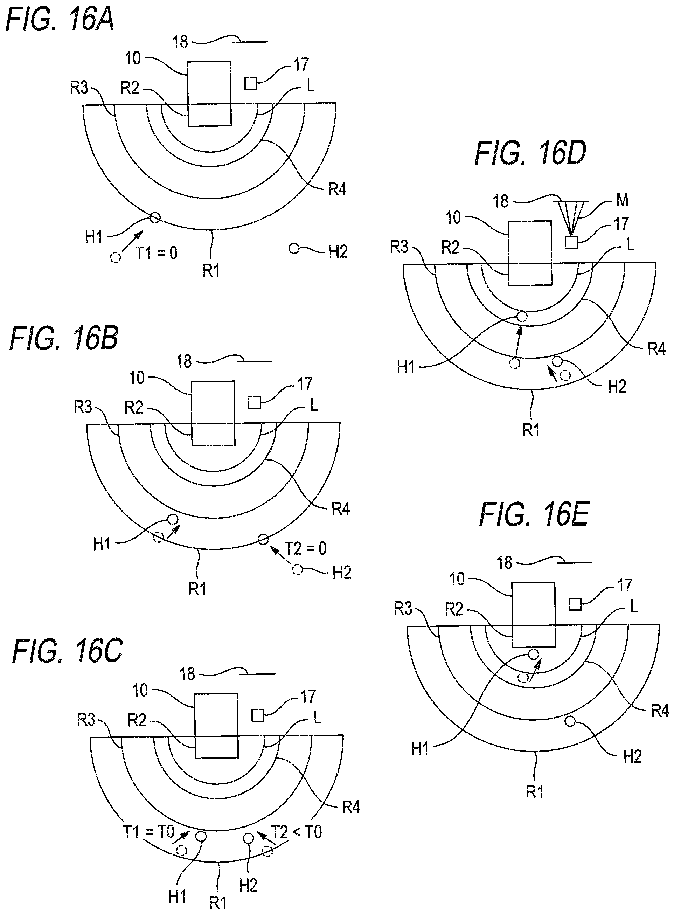

Figs. 16A to 16E illustrate a third example of a temporal change in a position of a person H around the image forming apparatus 10. Here, unlike the first example and the second example, Figs. 16A to 16E exemplifies a case where an elapsed time (a staying period of time in the person detection region R1) from entry to the person detection region R1 in relation to any one of persons H present in the person detection region R1 reaching a predefined period of time (an example of a set time period) is used as the instruction for starting the authentication process in step S40.

Fig. 16A illustrates a state in which the first person H1 enters the person detection region R1 from the outside of the person detection region R1, and the second person H2 is located outside the person detection region R1. In this case, in relation to the first person H1, an affirmative determination (YES) is performed in step S22, and a negative determination (NO) is performed in step S23, so that a tracking ID is given to the first person H1 and tracking is started in step S24, and thus a face of the first person H1 is searched for in step S25. When the first person H1 enters the person detection region R1 from the outside of the person detection region R1, clocking is started by using a timer, and a first staying time period T1 in which the first person H1 stays in the person detection region R1 is set to 0 (T1=0). In this case, since the second person H2 is present outside the person detection region R1, the second person H2 is not a target of the process.

Fig. 16B illustrates a state in which the first person H1 moves in the person detection region R1, and the second person H2 enters the person detection region R1 from the outside of the person detection region R1. In this case, a negative determination (NO) is performed in step S23 in relation to the first person H1, and the face of the first person H1 is continuously searched for. At this time, in relation to the second person H2, an affirmative determination (YES) is performed in step S22, and a negative determination (NO) is performed in step S23, so that a tracking ID is given to the second person H2 and tracking is started in step S24, and thus a face of the second person H2 is searched for in step S25. When the second person H2 enters the person detection region R1 from the outside of the person detection region R1, clocking is started by using a timer, and a second staying time period T2 in which the second person H2 stays in the person detection region R1 is set to 0 (T2=0). In this case, with the elapse of time from the state illustrated in Fig. 16A, the first staying time period T1 of the first person H1 is longer than the second staying time period T2 of the second person H2 (T1>T2).

Fig. 16C illustrates a state in which the first person H1 moves in the person detection region R1, and the second person H2 also moves in the person detection region R1. In this case, in relation to the first person H1, a negative determination (NO) is performed in step S23, and the face of the first person H1 is continuously searched for. At this time, also in relation to the second person H2, a negative determination (NO) is performed in step S23, and the face of the second person H2 is continuously searched for. In this case, the first staying time period T1 of the first person H1 reaches a predefined time period T0 (T1=T0), and the second staying time period T2 of the second person H2 is shorter than the first staying time period T1, that is, the predefined time period T0 (T2<T0). In the third example illustrated in Fig. 16C, in a case where a time period (in this example, the first staying time period T1) in which a specific person H (in this example, the first person H1) stays in the person detection region R1 reaches the predefined time period T0, the instruction unit 113 outputs the instruction for starting the face authentication process, and thus an affirmative determination (YES) is performed in step S40 so that the face authentication process in step S60 is started. Therefore, in this example, the selection unit 114 selects the first person H1 as a tracked person of the two tracked persons (the first person H1 and the second person H2).

Here, in the third example, after the first staying time period T1 of the specific person H (in this example, the first person H1) reaches the predefined time period T0, and thus the specific person H is selected as a target person, the target person is not changed from the specific person to another person even if the second staying time period T2 of another person (in this example, the second person H2) reaches the predefined time period T0 in a state in which the specific person H continuously stays in the person detection region R1.

Fig. 16D illustrates a state in which the first person H1 enters the approach detection region R4 from the person detection region R1 through the entry detection region R3, and the second person H2 moves in the person detection region R1. In this example, the respective processes in steps S61 to S65 are completed before the target person (herein, the first person H1) having entered the entry detection region R3 passes through the face detection limit L. In this example, the notification in step S66, S69 or S72 is performed before the target person (herein, the first person H1) having entered the entry detection region R3 passes through the face detection limit L. Along therewith, the projector 17 displays the message M on the screen 18. Here, the content of the message M is the same as described with reference to Figs. 11A to 11E.

In a case where authentication has been successful in the above-described way, the first person H1 as the target person comes close to the image forming apparatus 10. In a case where authentication has failed or a face image cannot be acquired, the first person H1 as the tracked person finds that authentication has not been successful before passing through the face detection limit L in which it is hard to acquire a face image using the first camera 15.

Fig. 16E illustrates a state in which the first person H1 is about to enter the person operation region R2 in the approach detection region R4, and the second person H2 is still present in the person detection region R1. In this example, the projector 17 finishes the notification of the message M during transition from the state illustrated in Fig. 16D to the state illustrated in Fig. 16E. In this example, the notification in step S67, S70 or S73 is performed before the target person (herein, the first person H1) having entered the entry detection region R3 enters the person operation region R2. Here, the content of the message M is the same as described with reference to Figs. 12A to 12D.

In the above-described way, in a state in which the first person H1 who is the target person having undergone the face authentication process enters the person operation region R2 and stands in front of the user interface 13, the Ul screen corresponding to the first person H1 is already displayed on the touch panel 130.

In the above-described third example, a description has been made of a case where the first staying time period T1 of the first person H1 reaches the predefined time period T0 earlier than the second staying time period T2 of the second person H2, and thus the first person H1 becomes a target person. However, in a case where the second staying time period T2 of the second person H2 reaches the predefined time period T0 earlier than the first staying time period T1 of the first person H1, the second person H2 becomes a target person.

In the above-described third example, a description has been made of a case where both of the first person H1 and the second person H2 enter the person detection region R1 and then continue to stay in the person detection region R1. However, for example, in a case where the first person H1 moves to the outside of the person detection region R1 before the first staying time period T1 of the first person H1 reaches the predefined time period T0, and the second person H2 moves to the outside of the person detection region R1 before the second staying time period T2 of the second person H2 reaches the predefined time period T0, in the same manner as in the second example, a target person is not generated, and the face authentication process in step S60 is not started.

### [Fourth example]

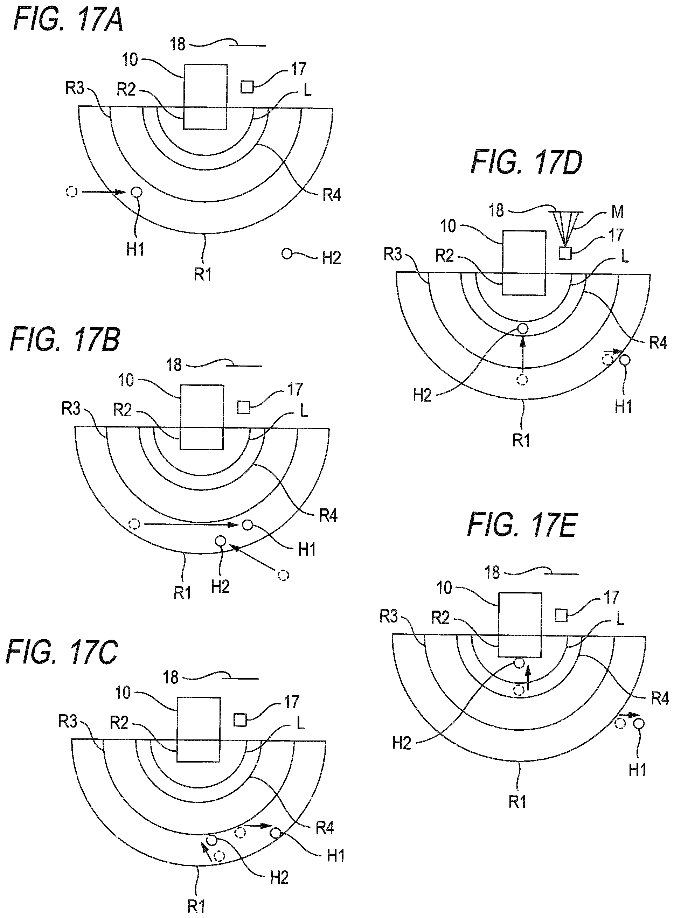

Figs. 17A to 17E illustrate a fourth example of a temporal change in a position of a person H around the image forming apparatus 10. Here, unlike the first to third examples, Figs. 17A to 17E exemplify a case where any one of persons H present in the person detection region R1 entering the person detection region R1 and then approaching the image forming apparatus 10 is used as the instruction for starting the authentication process in step S40.

Fig. 17A illustrates a state in which the first person H1 enters the person detection region R1 from the outside of the person detection region R1, and the second person H2 is located outside the person detection region R1. In this case, in relation to the first person H1, an affirmative determination (YES) is performed in step S22, and a negative determination (NO) is performed in step S23, so that a tracking ID is given to the first person H1 and tracking is started in step S24, and thus a face of the first person H1 is searched for in step S25. In this case, since the second person H2 is present outside the person detection region R1, the second person H2 is not a target of the process.

Fig. 17B illustrates a state in which the first person H1 moves in the person detection region R1, and the second person H2 enters the person detection region R1 from the outside of the person detection region R1. In this case, a negative determination (NO) is performed in step S23 in relation to the first person H1, and the face of the first person H1 is continuously searched for. At this time, in relation to the second person H2, an affirmative determination (YES) is performed in step S22, and a negative determination (NO) is performed in step S23, so that a tracking ID is given to the second person H2 and tracking is started in step S24, and thus a face of the second person H2 is searched for in step S25.

Fig. 17C illustrates a state in which the first person H1 moves in the person detection region R1, and the second person H2 also moves in the person detection region R1. In this case, however, the first person H1 is moving in a direction of becoming distant from the image forming apparatus 10, and the second person H2 is moving in a direction of coming close to the image forming apparatus 10. In the fourth example illustrated in Fig. 17C, in a case where it is detected that a specific person H (in this example, the second person H2) comes close to the image forming apparatus 10 (the first camera 15), the instruction unit 113 outputs the instruction for starting the face authentication process, and thus an affirmative determination (YES) is performed in step S40 so that the face authentication process in step S60 is started. Therefore, in this example, the selection unit 114 selects the second person H2 as a tracked person of the two tracked persons (the first person H1 and the second person H2).

Here, in the fourth example, after the specific person H (in this example, the second person H2) approaches the image forming apparatus 10 and is thus selected as a target person, the target person is not changed from the specific person to another person even if another person (in this example, the first person H1) approaches the image forming apparatus 10 in a state in which the specific person H continuously approaches the image forming apparatus 10.

Fig. 17D illustrates a state in which the first person H1 moves from the inside of the person detection region R1 to the outside of the person detection region R1, and the second person H2 enters the approach detection region R4 from the person detection region R1 through the entry detection region R3. In this example, the respective processes in steps S61 to S65 are completed before the target person (herein, the second person H2) having entered the entry detection region R3 passes through the face detection limit L. In this example, the notification in step S66, S69 or S72 is performed before the target person (herein, the second person H2) having entered the entry detection region R3 passes through the face detection limit L. Along therewith, the projector 17 displays the message M on the screen 18. Here, the content of the message M is the same as described with reference to Figs. 11A to 11E.

In a case where authentication has been successful in the above-described way, the second person H2 as the target person comes close to the image forming apparatus 10. In a case where authentication has failed or a face image cannot be acquired, the second person H2 as the tracked person finds that authentication has not been successful before passing through the face detection limit L in which it is hard to acquire a face image using the first camera 15.

In the state illustrated in Fig. 17D, in relation to the first person H1, a negative determination (NO) is performed in step S31, and a tracking ID and face information regarding the first person H1 are deleted from the tracking table in step S32.

Fig. 17E illustrates a state in which the first person H1 moves to the outside of the person detection region R1, and the second person H2 is about to enter the person operation region R2 in the approach detection region R4. In this example, the projector 17 finishes the notification of the message M during transition from the state illustrated in Fig. 17D to the state illustrated in Fig. 17E. In this example, the notification in step S67, S70 or S73 is performed before the target person (herein, the second person H2) having entered the person operation region R2 enters the entry detection region R3. Here, the content of the message M is the same as described with reference to Figs. 12A to 12D.

In the above-described way, in a state in which the second person H2 who is the target person having undergone the face authentication process enters the person operation region R2 and stands in front of the user interface 13, the UI screen corresponding to the second person H2 is already displayed on the touch panel 130.

In the above-described fourth example, a description has been made of a case where the second person H2 present in the person detection region R1 approaches the image forming apparatus 10, and the first person H1 present in the same person detection region R1 becomes distant from the image forming apparatus 10, so that the second person H2 becomes a target person. However, in a case where the first person H1 present in the person detection region R1 approaches the image forming apparatus 10, and the second person H2 present in the same person detection region R1 becomes distant from the image forming apparatus 10, the first person H1 becomes a target person.

In the above-described fourth example, a description has been made of a case where the second person H2 present in the person detection region R1 approaches the image forming apparatus 10, and the first person H1 present in the same person detection region R1 becomes distant from the image forming apparatus 10. However, in a case where both of the first person H1 and the second person H2 become distant from the image forming apparatus 10, in the same manner as in the above-described second example, a target person is not generated, and the face authentication process in step S60 is not started. On the other hand, in a case where both of the first person H1 and the second person H2 approach the image forming apparatus 10, a person H who approaches the image forming apparatus 10 faster becomes a target person.

### [Others]

Here, in the above-described first to fourth examples, a description will be made of a case where two persons H (the first person H1 and the second person H2) are present around the image forming apparatus 10, there may be a case where a single person H is present around the image forming apparatus 10, and a case where three or more persons H are present around the image forming apparatus 10.

In the present embodiment, in a case where face information of a target person (tracked person) has not been registered in the face authentication process in step S62 illustrated in Fig. 9 (NO), the Ul screen (Fig. 12D) for manual input authentication is displayed on the touch panel 130 in step S71 so that authentication is received through manual input, but the present invention is not limited thereto. For example, a face image of a person H staying in the person operation region R2 may be captured by using the second camera 16 provided in the user interface 13, and face information may be acquired from an obtained second camera image so that face authentication can be performed again. In this case, a second camera image may be displayed on the touch panel 130 along with an instruction for prompting capturing of a face image using the second camera 16.

In the present embodiment, in controlling of a mode of the image forming apparatus 10 illustrated in Fig. 6, transition from the sleep mode to the normal mode occurs in step S6, and then detection of the face of the person H is started in step S7, but the present invention is not limited thereto. For example, detection of the face of the person H may be started in conjunction with starting of a process of detecting a motion of the person H in step S4. In this case, the detection of the face of the person H is started in a state in which the sleep mode is set. In a case where the configuration is employed in which the detection of the face of the person H is started in a state in which the sleep mode is set, for example, when there is the instruction for starting the face authentication process in step S40 illustrated in Fig. 7 (YES in step S40), the image forming apparatus 10 may be caused to transition from the sleep mode to the normal mode.

In the present embodiment, a case where the projector 17 displaying an image is used as the notification unit 115 has been described as an example, but the present invention is not limited thereto. Methods may be used in which sound is output from, for example, a sound source, or light is emitted from, for example, a light source (lamp). Here, in the present embodiment, when authentication using the acquired face image has been successful (step S66), when authentication using the acquired face image has failed (step S69), and when authentication cannot be performed since a face image cannot be acquired (step S72), a notification is performed, but the present invention is not limited thereto. For example, (1) before a face image is detected from a first camera image, (2) before authentication using a face image is performed after the face image is detected from the first camera image, and (3) after an authentication process is performed, a notification may be performed.

### [Exemplary Embodiment 2]

Next, Exemplary Embodiment 2 of the present invention will be described in detail. Hereinafter, a description of the same constituent elements as in Embodiment 1 will be omitted as appropriate.

In the present embodiment, the instruction unit 113 outputs an instruction for starting an authentication process using the face image captured by the first camera 15 to the face registration/authentication unit 112. The instruction unit 113 outputs an instruction for displaying an authentication result of performing the authentication process on the touch panel 130 as a UI screen, to the display unit 104.

In the present embodiment, a UI screen corresponding to an authentication result is not displayed on the touch panel 130 right after an authentication process is performed, but the UI screen corresponding to the authentication result is displayed on the touch panel 130 in a case where a predetermined condition is satisfied after the authentication process is performed.

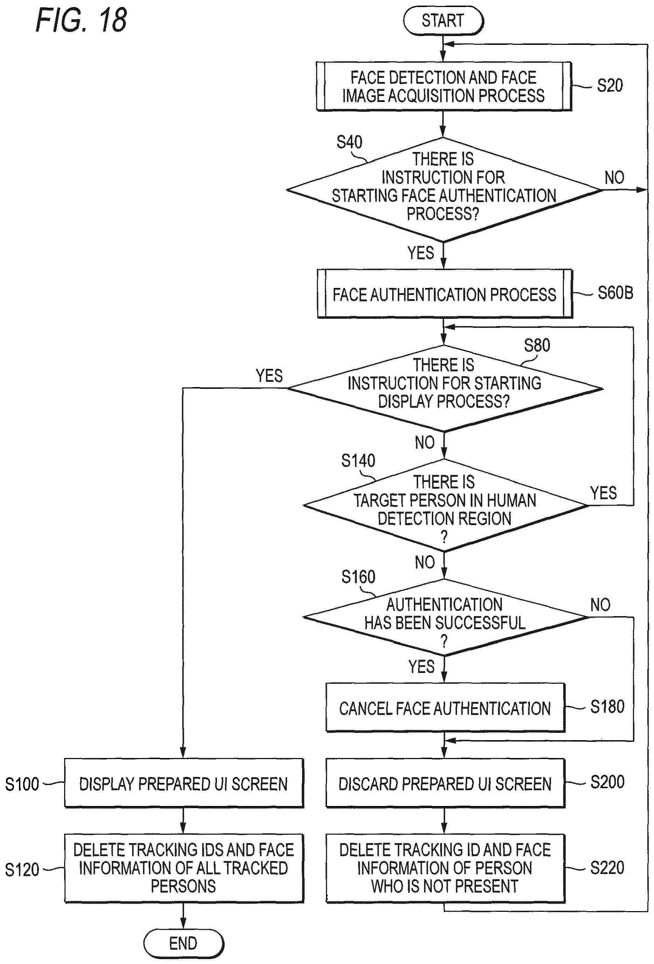

Fig. 18 is a flowchart illustrating a flow of an authentication procedure in the image forming apparatus 10. The process illustrated in Fig. 18 is performed in a state in which the image forming apparatus 10 is set to the normal mode.

If the image forming apparatus 10 is set to the normal mode, as shown in step S7 of Fig. 6, the first camera image acquired from the first camera 15 is analyzed, and the process of detecting the face of the person H present in the person detection region R1 is started. Along therewith, the face detection unit 111 performs a face detection and face image acquisition process of detecting the face of the person H from the first camera image and acquiring a detected face image (step S20). The face registration/authentication unit 112 determines whether or not there is an instruction for starting a face authentication process from the instruction unit 113 (step S40). In a case where a negative determination (NO) is performed in step S40, the flow returns to step S20, and the process is continued.

On the other hand, in a case where an affirmative determination (YES) is performed in step S40, the face registration/authentication unit 112 performs a face authentication process of setting whether or not authentication is successful by using a result of the face detection and face image acquisition process in step S20, that is, the face image of the person H obtained from the first camera image which is acquired from the first camera 15 (step S60B).

In Fig. 18, step S40 is executed after step S20 is executed, but, actually, step S20 and step S40 are executed in parallel. Therefore, in a case where an affirmative determination (YES) is performed in step S40 during execution of the face detection and face image acquisition process in step S20, that is, there is an instruction for starting the authentication process, the process in step S20 is stopped, and the flow proceeds to step S60B.

After the face authentication process in step S60B is completed, the control unit 101 determines whether or not there is an instruction for starting to display a Ul screen corresponding to an authentication result which is a result of the face authentication process on the touch panel 130 from the instruction unit 113 (step S80).

In a case where an affirmative determination (YES) is performed in step S80, the display unit 104 displays the UI screen corresponding to the authentication result, prepared in the face authentication process in step S60B on the touch panel 130 (step S100). The content of the Ul screen which is prepared in the face authentication process in step S60B and is displayed in step S100 will be described later. The face registration/authentication unit 112 deletes tracking IDs and face information pieces of all tracked persons registered in the tracking table (step S120), and completes the process. The tracking table (a tracking ID and face information of a tracked person) will be described later.

In contrast, in a case where a negative determination (NO) is performed in step S80, the person detection unit 110 analyzes the first camera image acquired from the first camera 15 so as to determine whether or not the person H (referred to as a target person) who is a target of the face authentication process in step S60B is present in the person detection region R1 (step S140). In a case where an affirmative determination (YES) is performed in step S140, the flow returns to step S80, and the process is continued.

On the other hand, in a case where a negative determination (NO) is performed in step S140, the face registration/authentication unit 112 determines whether or not authentication of the target person has been successful (the face is authenticated) in the face authentication process in step S60B (step S160). In a case where a negative determination (NO) is performed in step S160, the flow proceeds to step S200 to be described later.

In contrast, in a case where an affirmative determination (YES) is performed in step S160, the face registration/authentication unit 112 cancels the face authentication performed in the face authentication process in step S60B (step S180), and proceeds to the next step S200.

The control unit 101 discards the Ul screen corresponding to the authentication result, prepared in the face authentication process in step S60B (step S200). Here, the content of the Ul screen discarded in step S200 is the same as that described in the above step S100.

Thereafter, the person detection unit 110 deletes the tracking ID and the face information of the person H (tracked person) whose presence is not detected in step S140 from the tracking table (step S220), returns to step S20, and continues the process.

Each of the face detection and face image acquisition process in the above step S20 and the face authentication process in the above step S60B will be described in more detail.

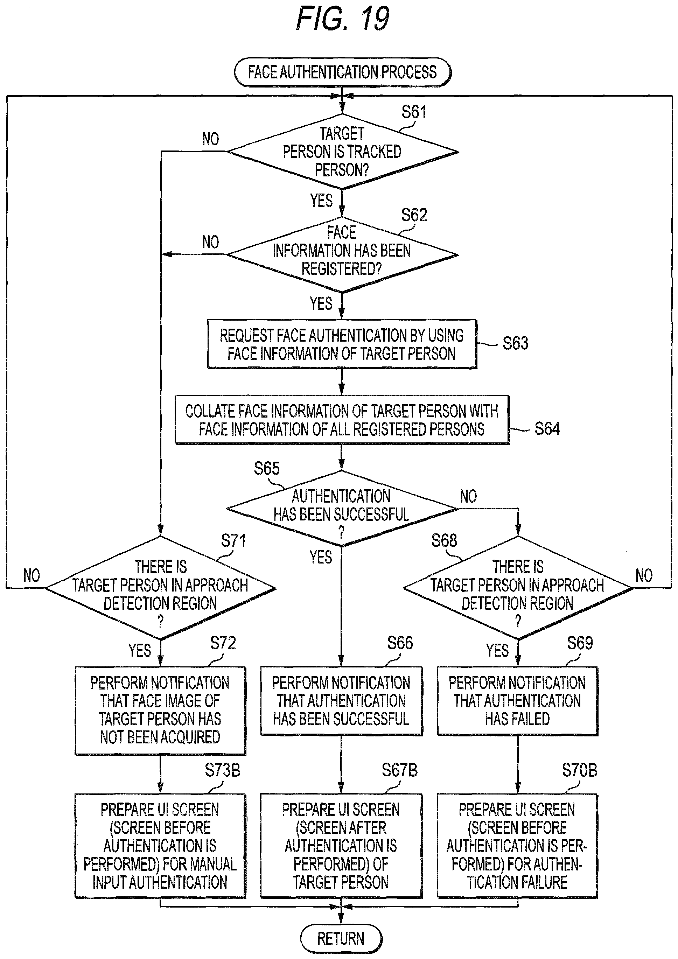

As described above, Fig. 8 is a flowchart illustrating a flow of the face detection and face image acquisition process (step S20) in the authentication procedure of the present embodiment. Fig. 19 is a flowchart illustrating a flow of the authentication process (step S60B) in the authentication procedure of the present embodiment.

Next, with reference to Fig. 19, a description will be made of the content of the face authentication process in step S60B.

Herein, first, the selection unit 114 selects a person H (target person) who is a target on which the instruction for the face authentication process is given in step S40 illustrated in Fig. 18, and the face registration/authentication unit 112 determines whether or not the target person is a tracked person registered in the tracking table (step S61). In a case where a negative determination (NO) is performed in step S61, the flow proceeds to step S71 to be described later.

In contrast, in a case where an affirmative determination (YES) is performed in step S61, the face registration/authentication unit 112 determines whether or not face information of the same tracked person as the target person is registered in the storage unit 105 (step S62). In a case where a negative determination (NO) is performed in step S62, the flow proceeds to step S71 to be described later.

On the other hand, in a case where an affirmative determination (YES) is performed in step S62, the face registration/authentication unit 112 makes a request for face authentication by using face information of the target person whose registration in the tracking table is confirmed in step S62 (step S63). Next, the face registration/authentication unit 112 collates the face information of the target person with face information pieces of all registered persons registered in the registration table (step S64). The face registration/authentication unit 112 determines whether or not authentication has been successful (step S65). Here, in step S65, an affirmative determination (YES) is performed if the face information of the target person matches any one of the face information pieces of all the registered persons, and a negative determination (NO) is performed if the face information of the target person does not match any one of the face information pieces of all the registered persons.

In a case where an affirmative determination (YES) is performed in step S65, the notification unit 115 notifies the target person or the like that the authentication has been successful by using the projector 17 (step S66). The display unit 104 prepares a UI screen (a screen after authentication is performed) for the target person which is set for the authenticated target person (step S67B), and finishes the process.

On the other hand, in a case where a negative determination (NO) is performed in step S65, the person detection unit 110 determines whether or not a target person is present in the approach detection region R4 (step S68). In a case where a negative determination (NO) is performed in step S68, the flow returns to step S61, and the process is continued.

In contrast, in a case where an affirmative determination (YES) is performed in step S68, the notification unit 115 notifies the target person or the like that authentication has failed by using the projector 17 (step S69). The display unit 104 prepares a UI screen (a screen before authentication is performed) corresponding to an authentication failure which is set for authentication failure (step S70B), and finishes the process.

On the other hand, in a case where a negative determination (NO) is performed in step S61 and in a case where a negative determination (NO) is performed in step S62, the person detection unit 110 determines whether or not a target person is present in the approach detection region R4 (step S71). In a case where a negative determination (NO) is performed in step S71, the flow returns to step S61, and the process is continued.

In contrast, in a case where an affirmative determination (YES) is performed in step S71, the notification unit 115 notifies the target person or the like that a face image of the target person has not been acquired by using the projector 17 (step S72). The display unit 104 prepares an Ul screen (a screen before authentication is performed) corresponding to manual input authentication which is set for an authentication process using manual inputting (step S73B), and finishes the process.

Then, the authentication procedure illustrated in Fig. 18 (including Figs. 8 and 19) will be described by using specific examples.

In the present embodiment, in a case where it is detected that a specific (single) person H performs an action satisfying a specific condition among one or more persons H present in the person detection region R1 on the basis of an analysis result of the first camera image captured by the first camera 15, in step S40, the instruction unit 113 outputs an instruction for starting the authentication process in step S60B. In the present embodiment, in a case where it is detected that the specific person H performs an action satisfying a predefined condition after the face authentication process in step S60B is completed, in step S80, the instruction unit 113 outputs an instruction for starting to display the UI screen in step S100.

Hereinafter, three examples (a first example to a third example) in which the "specific condition", and the "predefined condition" differ will be described in order. In each of the three examples, a description will be made of a pattern (referred to as a first pattern) in which a Ul screen prepared so as to correspond to a specific person H who is a target of the face authentication process in step S60B is displayed on the touch panel 130, and a pattern (referred to as a second pattern) in which the Ul screen is not displayed.

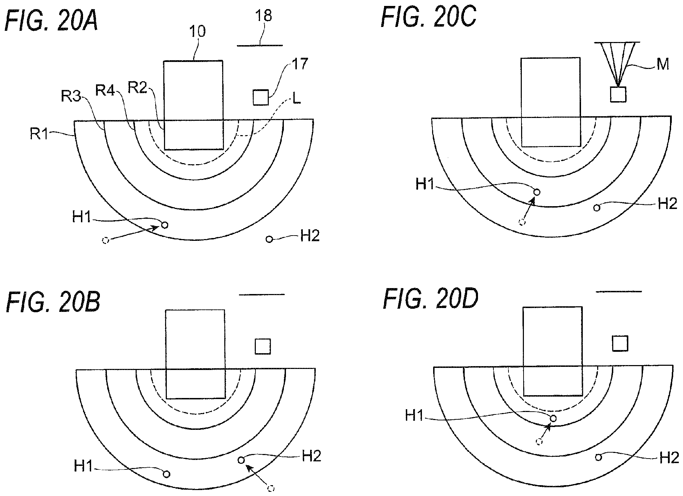

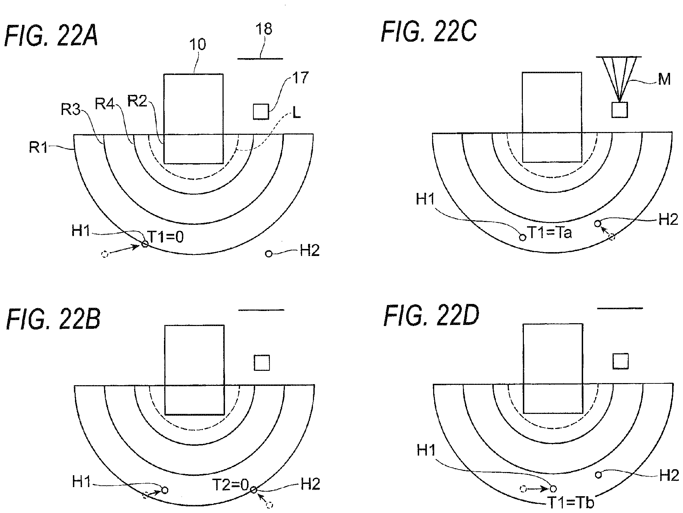

Here, in Figs. 20A to 21D (the first example) described below and Figs. 22A to 25D (the second example and the third example) described next, a case is exemplified in which two persons including a first person H1 and a second person H2 are present around the image forming apparatus 10 as persons H. Figs. 20A to 25D illustrate a screen 18 onto which an image is projected by the projector 17.

### [First example]

First, a description will be made of the "first example" in which any one of persons H present in the person detection region R1 entering the entry detection region R3 from the person detection region R1 is used as the instruction for starting the authentication process in step S40, and the person H having entered the entry detection region R3 from the person detection region R1 further entering the approach detection region R4 from the entry detection region R3 is used as the instruction for the display starting process in step S80.

### (First pattern)

Figs. 20A to 20D illustrate a first pattern in the first example of a temporal change in a position of a person H around the image forming apparatus 10.

Fig. 20A illustrates a state in which the first person H1 enters the person detection region R1 from the outside of the person detection region R1, and the second person H2 is located outside the person detection region R1. In this case, in relation to the first person H1, an affirmative determination (YES) is performed in step S22, and a negative determination (NO) is performed in step S23, so that a tracking ID is given to the first person H1 and tracking is started in step S24, and thus a face of the first person H1 is searched for in step S25. In this case, since the second person H2 is present outside the person detection region R1, the second person H2 is not a target of the process.

Fig. 20B illustrates a state in which the first person H1 is still present in the person detection region R1, and the second person H2 enters the person detection region R1 from the outside of the person detection region R1. At this time, in relation to the first person H1, an affirmative determination (YES) is performed in step S22 and an affirmative determination (YES) is also performed in step S23, and, the face of the first person H1 is continuously searched for. In addition, at this time, in relation to the second person H2, an affirmative determination (YES) is performed in step S22, and a negative determination (NO) is performed in step S23, so that a tracking ID is given to the second person H2 and tracking is started in step S24, and thus a face of the second person H2 is searched for in step S25.

Fig. 20C illustrates a state in which the first person H1 enters the entry detection region R3 from the person detection region R1, and the second person H2 is still present in the person detection region R1. Here, in the first example, in a case where a specific person H enters the entry detection region R3 from the person detection region R1, the instruction unit 113 outputs the instruction for starting the authentication process, and thus an affirmative determination (YES) is performed in step S40 so that the authentication process in step S60B is started (executed). Therefore, in this example, the selection unit 114 selects the first person H1 as a target person of the two tracked persons (the first person H1 and the second person H2).

In the first example, the respective processes in steps S61 to S65 are completed before the tracked person (herein, the first person H1) having entered the entry detection region R3 passes through the face detection limit L. In the first example, the notification in step S66, S69, or S72 is performed before the tracked person (herein, the first person H1) having entered the entry detection region R3 passes through the face detection limit L. Along therewith, the projector 17 displays a message M on the screen 18. Here, in a case where an affirmative determination (YES) is performed in steps S61 and S62 and then an affirmative determination (YES) is performed in step S65, the projector 17 displays a text image, for example, "authentication has been successful" as the message M in step S66. in a case where an affirmative determination (YES) is performed in steps S61 and S62 and then a negative determination (NO) is performed in step S65, the projector 17 displays a text image, for example, "authentication has failed" or "you are not registered as a user" as the message M in step S69. In a case where a negative determination (NO) is performed in step S61 or S62, the projector 17 displays a text image, for example, "a face image cannot be acquired" in step S72.

In a case where authentication has been successful in the above-described way, the specific person H (herein, the first person H1) as the target person comes near to the image forming apparatus 10. In a case where authentication has failed or a face image cannot be acquired, the specific person H (herein, the first person H1) as the tracked person finds that authentication has not been successful before passing through the face detection limit L in which it is hard to acquire a face image using the first camera 15.

Herein, a case where information that "a face image cannot be acquired" is presented in step S72 has been described, but presented information is not limited thereto. For example, in step S72, a notification that the person H is requested not to come near to an apparatus (the image forming apparatus 10), a notification that the person H is requested not to come near to an apparatus (the image forming apparatus 10) since face authentication of the person H is not completed, a notification that the person H is requested to be stopped, a notification that the person H is requested to be stopped since face authentication of the person H is not completed, a notification for informing that a facial part of the person H is deviated from an imaging region of the first camera 15, and the like may be performed.

In the first example, the respective processes in steps S67, S70 and S73 are completed before the target person (herein, the first person H1) having entered the entry detection region R3 enters the approach detection region R4. The content of Ul screens respectively prepared in steps S67, S70 and S73 will be described later.

Fig. 20D illustrates a state in which the first person H1 who is a target person enters the approach detection region R4 from the entry detection region R3, and the second person H2 who is not a target person is still present in the person detection region R1. Here, in the first example, in a case where thee specific person H (in this example, the first person H1) who becomes a target person as a result of entering the entry detection region R3 from the person detection region R1 enters the approach detection region R4 from the entry detection region R3, the instruction unit 113 outputs an instruction for starting the display process, and thus an affirmative determination (YES) is performed in step S80 so that display of a UI screen in step S100 is started. In the first example, the projector 17 finishes the notification of the message M during transition from the state illustrated in Fig. 20C to the state illustrated in Fig. 20D.

Here, in the first example, display of a Ul screen in step S100 may be performed before the target person (herein, the first person H1) having entered the approach detection region R4 enters the person operation region R2. In the above-described way, in a state in which the target person (herein, the first person H1) enters the person operation region R2 and stands in front of the user interface 13, a UI screen corresponding to an authentication result of the target person is already displayed on the touch panel 130.

Then, here, a description will be made of UI screens which are prepared in steps S67, S70 and S73 and are displayed on the touch panel 130 in step S100.

Figs. 12A to 12D are diagrams illustrating examples of UI screens prepared in the face authentication process illustrated in Fig. 19. Here, Figs. 12A and 12B illustrate examples of the UI screens (the screens after authentication is performed) related to the target person, prepared in step S67 illustrated in Fig. 19. Fig. 12C illustrates an example of the UI screen (the screen before authentication is performed) corresponding to an authentication failure, prepared in step S70 illustrated in Fig. 19. Fig. 12D illustrates an example of the UI screen (the screen before authentication is performed) corresponding to manual input authentication, prepared in step S73 illustrated in Fig. 19.

First, in a case where a target person is "Fujitaro" as a registered person who is registered in the registration table (refer to Fig. 10A), "Fujitaro" is registered as a tracked person in the tracking table (refer to Fig. 10B) (YES in step S61), face information of "Fujitaro" is registered in the tracking table (YES in step S62), and authentication has been successful (YES) in step S65, the UI screen illustrated in Fig. 12A is prepared in step S67. The user name and the respective application buttons (six buttons in this example) are displayed on the UI screen according to the registration table for "Fujitaro" illustrated in Fig. 10A. In the touch panel 130, any one of the buttons is pressed, and thus an application function corresponding to the button is executed.

Next, in a case where a target person is "Fuji Hanako" as a registered person who is registered in the registration table (refer to Fig. 10A), "Fuji Hanako" is registered as a tracked person in the tracking table (refer to Fig. 10B) (YES in step S61), face information of "Fuji Hanako" is registered in the tracking table (YES in step S62), and authentication has been successful (YES) in step S65, the UI screen illustrated in Fig. 12B is prepared in step S67. The user name and the respective application buttons (eight buttons in this example) are displayed on the UI screen according to the registration table for "Fuji Hanako" illustrated in Fig. 10A. In the touch panel 130, any one of the buttons is pressed, and thus an application function corresponding to the button is executed.

Next, in a case where a target person is an unregistered person (for example, "Fujijirou") who is not registered in the registration table (refer to Fig. 10A), "Fujijirou" is registered as a tracked person in the tracking table (refer to Fig. 10B) (YES in step S61), face information of "Fujijirou" is registered in the tracking table (YES in step S62), and authentication has failed (NO) in step S65, the UI screen illustrated in Fig. 12C is prepared in step S70. For example, the text that "authentication has failed" and a "close" button are displayed on the UI screen.

Finally, in a case where a target person is a registered person (who is herein "Fujitaro" but may be "Fuji Hanako") who is registered in the registration table (refer to Fig. 10A), and "Fujitaro" is not registered as a tracked person in the tracking table (refer to Fig. 10B) (NO in step S61), the UI screen illustrated in Fig. 12D is prepared in step S73. In a case where a target person is a registered person (who is herein "Fujitaro" but may be "Fuji Hanako") who is registered in the registration table (refer to Fig. 10A), "Fujitaro" is registered as a tracked person in the tracking table (refer to Fig. 10B) (YES in step S61), and face information of the "Fujitaro" is not registered in the tracking table (NO in step S62), the UI screen illustrated in Fig. 12D is prepared in step S73. In a case where a target person is an unregistered person (for example, "Fujijirou") who is not registered in the registration table (refer to Fig. 10A), and "Fujijirou" is not registered as a tracked person in the tracking table (NO in step S61), the UI screen illustrated in Fig. 12D is prepared in step S73. In a case where a target person is an unregistered person (for example, "Fujijirou") who is not registered in the registration table (refer to Fig. 10A), "Fujijirou" is registered as a tracked person in the tracking table (refer to Fig. 10B) (YES in step S61), and face information of the "Fujijirou" is not registered in the tracking table (NO in step S62), the UI screen illustrated in Fig. 12D is prepared in step S73. The UI screen is displayed so as to receive an authentication request through a user's manual inputting. A virtual keyboard, a display region in which the content (a user ID or a password) which is input by using the virtual keyboard is displayed, a "cancel" button, and an "enter" button are displayed on the UI screen.

As mentioned above, in the present embodiment, the content of the screens after authentication is performed (when authentication is successful), illustrated in Figs. 12A and 12B, the content of the screen before authentication is performed (when authentication fails), illustrated in Fig. 12C, and the content of the screen before authentication is performed (when authentication is not possible) corresponding to manual inputting, illustrated in Fig. 12D, are different from each other. In the present embodiment, as illustrated in Figs. 12A and 12B, the content of the screen after authentication is performed differs for each registered person.

Here, a brief description will be made of cases where a face image of a tracked person can be detected and cannot be detected.

Figs. 13A and 13B illustrate examples of first camera images captured by the first camera 15. Here, Fig. 13A illustrates a first camera image obtained by imaging a face of a person H who does not wear a mask, and Fig. 13B illustrates a first camera image obtained by imaging a face of a person H who wears a mask.

The face registration/authentication unit 112 of the present embodiment detects feature points at a plurality of facial parts (for example, 14 or more parts) such as the eyes, the nose, and the mouth in the face registration and face authentication, and extracts a feature amount of the face after correcting a size, a direction, and the like of the face in a three-dimensional manner. For this reason, in a case where the person H wears a mask or sunglasses so as to cover a part of the face, even if an image including the face of the person H is included in the first camera image, detection of feature points of the face and extraction of a feature point cannot performed from the first camera image. Also in a case where the person H faces straight sideways or backward with respect to the first camera 15, detection of feature points of the face and extraction of a feature point cannot performed from the first camera image. In such cases, a negative determination (NO) is performed in step S26 illustrated in Fig. 8.

Next, a brief description will be made of a method of selecting one face information piece in a case where a plurality of face information pieces are acquired in relation to the same tracked person.

Figs. 14A and 14B illustrate examples of first camera images captured by the first camera 15. Here, Fig. 14A illustrates a first camera image obtained by imaging a person H present at a position which is relatively far from the face detection limit L in the person detection region R1, and Fig. 14B illustrates a first camera image obtained by imaging a person H present at a position which is relatively close to the face detection limit L in the person detection region R1.

As is clear from Figs. 14A and 14B, the face image illustrated in Fig. 14B is larger (the number of pixels is larger) than the face image illustrated in Fig. 14A as the person H comes closer to the first camera 15, and thus it becomes easier to extract a feature amount. Thus, for example, in a case where face information of the person H is acquired from the first camera image illustrated in Fig. 14A and is registered in the tracking table, and then face information of the person H is acquired from the first camera image illustrated in Fig. 14B, the latter face information is selected and the former face information is deleted in step S29.

In addition, for example, in a case where face information of the person H is acquired from a first camera image obtained by imaging a face of a person H obliquely facing the first camera 15 and is registered in the tracking table, and then face information of the person H is acquired from a first camera image obtained by imaging the face of the person H facing the front of the first camera 15, the latter face information may be selected and the former face information may be deleted in step S29.

### (Second pattern)

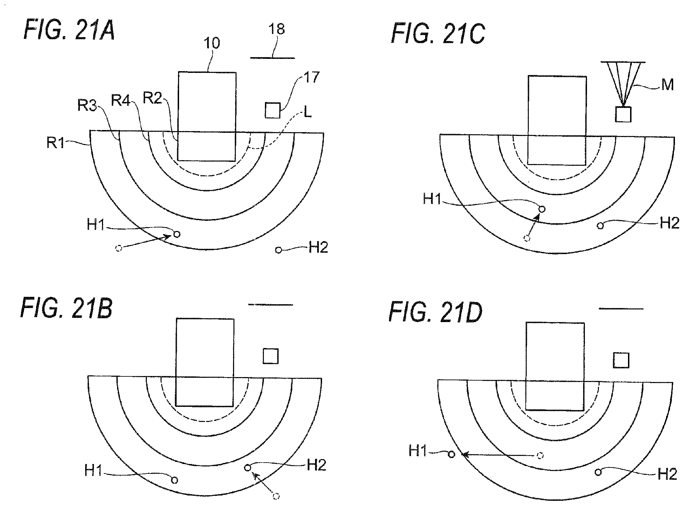

Figs. 21A to 21D illustrate a second pattern in the first example of a temporal change in a position of a person H around the image forming apparatus 10.

Fig. 21A illustrates a state in which the first person H1 enters the person detection region R1 from the outside of the person detection region R1, and the second person H2 is located outside the person detection region R1.

Fig. 21B illustrates a state in which the first person H1 is still present in the person detection region R1, and the second person H2 enters the person detection region R1 from the outside of the person detection region R1.

Fig. 21C illustrates a state in which the first person H1 enters the entry detection region R3 from the person detection region R1, and the second person H2 is still present in the person detection region R1.

Figs. 21A to 21C are respectively the same as Figs. 20A to 20C described in the first pattern, and thus detailed description thereof will be omitted herein.

Fig. 21D illustrates a state in which the first person H1 who is a target person moves to the outside of the person detection region R1 from the entry detection region R3, and the second person H2 who is not a target person is still present in the person detection region R1. In the first example, in a case where the first person H1 who becomes a target person by entering the entry detection region R3 from the person detection region R1 moves to the outside of the person detection region R1, a negative determination (NO) is performed in step S140.

Here, in a case where authentication is successful in the face authentication process in step S60B (YES in step S160), the face authentication is canceled in step S180. In a case where authentication is successful (YES in step S160) and authentication fails (NO in step S160) in the face authentication process in step S60B, the UI screens prepared in steps S67, S70 and S73 are discarded in step S200. In step S220, the tracking ID and the face information regarding the target person (herein, the first person H1) are deleted from the tracking table. However, information regarding the person H (herein, the second person H2) other than the target person is not deleted from the tracking table, the flow returns to step S20, and then tracking and search for a face are continuously performed.

### (Summary of first example)

As mentioned above, in the first example, unless the first person H1 or the second person H2 who is being tracked in the person detection region R1 enters the entry detection region R3, a target person is not generated, and, as a result, the face authentication process in step S60B is not started. In the first example, unless a specific person H as a target person further enters the approach detection region R4, the UI screen as an authentication result of the target person (the specific person H) in step S100 is not displayed on the touch panel 130.

Here, in the first example, a description has been made of a case where both of the first person H1 and the second person H2 enter the person detection region R1, then the first person H1 enters the entry detection region R3 earlier than the second person H2, and thus the first person H1 becomes a target person. However, in a case where the second person H2 enters the entry detection region R3 earlier than the first person H1, the second person H2 becomes a target person. In a case where both of the first person H1 and the second person H2 enter the person detection region R1, and then both of the first person H1 and the second person H2 move to the outside of the person detection region R1 without entering the entry detection region R3, a target person is not generated, and thus the face authentication process in step S60B is not started.

Here, in the first example, after the specific person H (the first person H1 in this example) enters the entry detection region R3 from the person detection region R1 and is thus selected as a tracked person, the tracked person is not changed from the specific person H (the first person H1) to another person H (the second person H2) even if another person H (the second person H2 in this example) enters the entry detection region R3 from the person detection region R1 in a state in which the specific person H continues to stay in the entry detection region R3.

### [Second example]

Next, a description will be made of the "second example" in which a staying time period from entry to the person detection region R1 in relation to any one of persons H present in the person detection region R1 reaching a first predefined time period which is set in advance is used as the instruction for starting the authentication process in step S40, and the staying time period reaching a second predefined time period (the second predefined time period > the first predefined time period) is used as the instruction for starting the display process in step S80.

### (First pattern)

Figs. 22A to 22D illustrate a first pattern in the second example of a temporal change in a position of a person H around the image forming apparatus 10.

Fig. 22A illustrates a state in which the first person H1 enters the person detection region R1 from the outside of the person detection region R1, and the second person H2 is located outside the person detection region R1. In this case, in relation to the first person H1, an affirmative determination (YES) is performed in step S22, and a negative determination (NO) is performed in step S23, so that a tracking ID is given to the first person H1 and tracking is started in step S24, and thus a face of the first person H1 is searched for in step S25. When the first person H1 enters the person detection region R1 from the outside of the person detection region R1, clocking is started by using a timer, and a first staying time period T1 in which the first person H1 stays in the person detection region R1 is set to 0 (T1=0). In this case, since the second person H2 is present outside the person detection region R1, the second person H2 is not a target of the process.

Fig. 22B illustrates a state in which the first person H1 moves in the person detection region R1, and the second person H2 enters the person detection region R1 from the outside of the person detection region R1. At this time, an affirmative determination (YES) is performed in step S22 and an affirmative determination (YES) is performed in step S23, and the face of the first person H1 is continuously searched for. In addition, at this time, in relation to the second person H2, an affirmative determination (YES) is performed in step S22, and a negative determination (NO) is performed in step S23, so that a tracking ID is given to the second person H2 and tracking is started in step S24, and thus a face of the second person H2 is searched for in step S25. When the second person H2 enters the person detection region R1 from the outside of the person detection region R1, clocking is started by using a timer, and a second staying time period T2 in which the second person H2 stays in the person detection region R1 is set to 0 (T2=0). In this case, with the elapse of time from the state illustrated in Fig. 22A, the first staying time period T1 of the first person H1 is longer than the second staying time period T2 of the second person H2 (T1>T2).

Fig. 22C illustrates a state in which the first person H1 is still present in the person detection region R1, and the second person H2 moves in the person detection region R1. In this case, the first staying time period T1 of the first person H1 reaches a first predefined time period Ta (T1 =Ta), and the second staying time period T2 of the second person H2 is shorter than the first staying time period T1, that is, the predefined time period Ta (T2<Ta). Here, in the second example, in a case where a staying time period T of a specific person H reaches the first predefined time period Ta (T=Ta), the instruction unit 113 outputs the instruction for starting the face authentication process, and thus an affirmative determination (YES) is performed in step S40 so that the face authentication process in step S60B is started (performed). Therefore, in this example, the selection unit 114 selects the first person H1 as a tracked person of the two tracked persons (the first person H1 and the second person H2).

Also in the second example, the respective processes in steps S61 to S65 are completed before the target person (herein, the first person H1) having entered the entry detection region R3 passes through the face detection limit L. Also in the second example, the notification in step S66, S69 or S72 is performed before the target person (herein, the first person H1) having entered the entry detection region R3 passes through the face detection limit L. Along therewith, the projector 17 displays the message M on the screen 18. The content of the message M is the same as described in the first pattern in the first example illustrated in Figs. 20A to 20D.

In the second example, the respective processes in steps S67, S70 and S73 are completed before the staying time period T of a target person (herein, the first person H1) reaching the first predefined time period Ta reaches a second predefined time period Tb (Tb>Ta). The content of UI screens prepared in steps S67, S70 and S73 is the same as described with reference to Fig.s 12A to 12D.

Fig. 22D illustrates a state in which the first person H1 who is a target person moves in the person detection region R1, and the second person H2 who is not a target person is still present in the person detection region R1. In this case, the first staying time period T1 of the first person H1 reaches the second predefined time period Tb (an example of a set time period) (T1=Tb), and the second staying time period T2 of the second person H2 is shorter than the first staying time period T1 (T2<T1). Here, in the second example, in a case where a staying time period T (herein, the first staying time period T1) of a specific person H (in this example, the first person H1) of the specific person H (in this example, the first person H1) who becomes a tracked person as a result of the staying time period T reaching the first predefined time period Ta further reaches the second predefined time period Tb (T=Tb), the instruction unit 113 outputs the instruction for starting the display process, and thus an affirmative determination (YES) is performed in step S80 so that display of the UI screen in step S100 is started. In the second example, the projector 17 finishes the notification of the message M during transition from the state illustrated in Fig. 22C to the state illustrated in Fig. 22D.

Here, in the second example, the display of the UI screen in step S100 may be performed before the target person (herein, the first person H1) whose staying time period T has reached the second predefined time period Tb enters the person operation region R2. In the above-described way, in a state in which the target person (herein, the first person H1) enters the person operation region R2 and stands in front of the user interface 13, a UI screen corresponding to an authentication result of the target person is already displayed on the touch panel 130.

### (Second pattern)

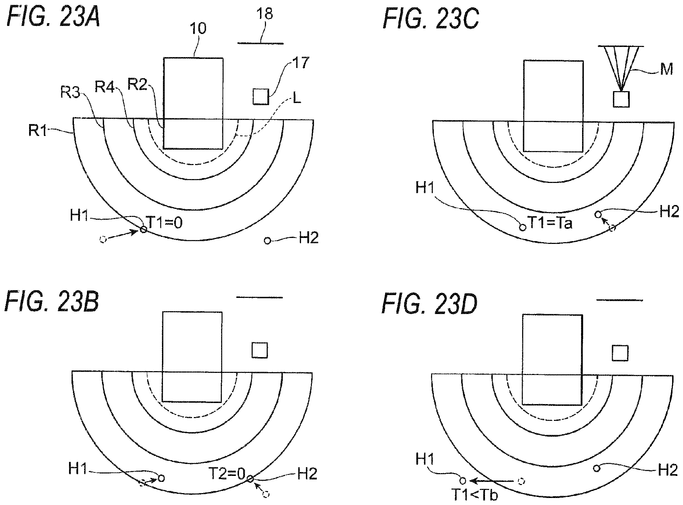

Figs. 23A to 23D illustrate a second pattern in the second example of a temporal change in a position of a person H around the image forming apparatus 10.

Fig. 23A illustrates a state in which the first person H1 enters the person detection region R1 from the outside of the person detection region R1, and the second person H2 is located outside the person detection region R1.

Fig. 23B illustrates a state in which the first person H1 moves in the person detection region R1, and the second person H2 enters the person detection region R1 from the outside of the person detection region R1.

Fig. 23C illustrates a state in which the first person H1 is still present in the person detection region R1, and the second person H2 moves in the person detection region R1.

Figs. 23A to 23C are respectively the same as Figs. 22A to 22C described in the first pattern, and thus detailed description thereof will be omitted herein.

Fig. 23D illustrates a state in which the first person H1 who is a target person moves to the outside of the person detection region R1 from the person detection region R1, and the second person H2 who is not a target person is still present in the person detection region R1. In this case, the first staying time period T1 of the first person H1 does not reach the second predefined time period Tb (T1<Tb), and the second staying time period T2 of the second person H2 is shorter than the first staying time period T1 (T2<T1). In the second example, in a case where the first person H1 who becomes a target person as a result of the staying time period T (herein, the first staying time period T1) reaching the first predefined time period Ta moves to the outside of the person detection region R1 before the staying time period T reaches the second predefined time period Tb, a negative determination (NO) is performed in step S140.

Here, in a case where authentication is successful in the face authentication process in step S60B (YES in step S160), the face authentication is canceled in step S180. In a case where authentication is successful (YES in step S160) and authentication fails (NO in step S160) in the face authentication process in step S60B, the UI screens prepared in steps S67, S70 and S73 are discarded in step S200. In step S220, the tracking ID and the face information regarding the target person (herein, the first person H1) are deleted from the tracking table. However, information regarding the person H (herein, the second person H2) other than the target person is not deleted from the tracking table, the flow returns to step S20, and then tracking and search for a face are continuously performed.

### (Summary of second example)

As mentioned above, in the second example, unless the staying time period T of the first person H1 or the second person H2 who is being tracked in the person detection region R1 reaches the first predefined time period Ta, a target person is not generated, and, as a result, the face authentication process in step S60B is not started. In the second example, unless a staying time period T of a specific person H as a target person further reaches the second predefined time period Tb, the UI screen as an authentication result of the target person (the specific person H) in step S100 is not displayed on the touch panel 130.

Here, in the second example, a description has been made of a case where both of the first person H1 and the second person H2 enter the person detection region R1, then the first staying time period T1 of the first person H1 reaches the first predefined time period Ta earlier than the second staying time period T2 of the second person H2, and thus the first person H1 becomes a target person. However, in a case where the second staying time period T2 of the second person H2 reaches the first predefined time period Ta earlier than the first staying time period T1 of the first person H1, the second person H2 becomes a target person. In a case where both of the first person H1 and the second person H2 enter the person detection region R1, and then both of the first person H1 and the second person H2 move to the outside of the person detection region R1 before the staying time periods T thereof reach the first predefined time period Ta, a target person is not generated, and thus the face authentication process in step S60B is not started.

Here, in the second example, after the staying time period T (herein, the first staying time period T1) of the specific person H (the first person H1 in this example) reaches the first predefined time period Ta, and thus the specific person H is selected as a tracked person, the tracked person is not changed from the specific person H (the first person H1) to another person H (the second person H2) even if a staying time period (herein, the second staying time period T2) of another person H (the second person H2 in this example) reaches the first predefined time period Ta in a state in which the specific person H continues to stay in the person detection region R1.

### [Third example]

Finally, a description will be made of the "third example" in which any one of persons H present in the person detection region R1 entering the person detection region R1 and then approaching the image forming apparatus 10 is used as the instruction for starting the face authentication process in step S40, and the person H who enters the person detection region R1 and then approaches the image forming apparatus 10 further approaching the image forming apparatus 10 is used as the instruction for starting the display process in step S80.

### (First pattern)

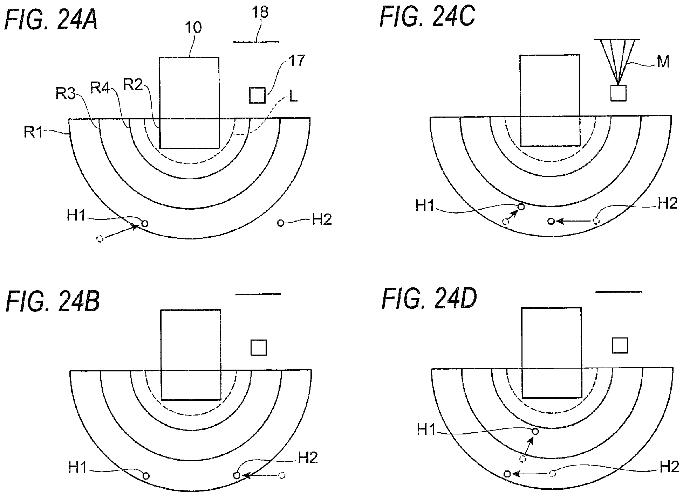

Figs. 24A to 24D illustrate a first pattern in the third example of a temporal change in a position of a person H around the image forming apparatus 10.

Fig. 24A illustrates a state in which the first person H1 enters the person detection region R1 from the outside of the person detection region R1, and the second person H2 is located outside the person detection region R1. In this case, in relation to the first person H1, an affirmative determination (YES) is performed in step S22, and a negative determination (NO) is performed in step S23, so that a tracking ID is given to the first person H1 and tracking is started in step S24, and thus a face of the first person H1 is searched for in step S25. In this case, since the second person H2 is present outside the person detection region R1, the second person H2 is not a target of the process.

Fig. 24B illustrates a state in which the first person H1 is still present in the person detection region R1, and the second person H2 enters the person detection region R1 from the outside of the person detection region R1. In this case, in relation to the first person H1, an affirmative determination (YES) is performed in step S22 and an affirmative determination (YES) is also performed in step S23, and, the face of the first person H1 is continuously searched for. At this time, in relation to the second person H2, an affirmative determination (YES) is performed in step S22, and a negative determination (NO) is performed in step S23, so that a tracking ID is given to the second person H2 and tracking is started in step S24, and thus a face of the second person H2 is searched for in step S25.

Fig. 24C illustrates a state in which the first person H1 moves in the person detection region R1, and the second person H2 also moves in the person detection region R1. However, in this case, the first person H1 moves in a direction of coming close to the image forming apparatus 10, and the second person H2 moves in a direction of not coming close to the image forming apparatus 10 compared with the first person H1. Here, in the third example, in a case where a specific person H enters the person detection region R1 and then approaches the image forming apparatus 10, the instruction unit 113 outputs the instruction for starting the authentication process, and thus an affirmative determination (YES) is performed in step S40 so that the authentication process in step S60 is started (executed). Therefore, in this example, the selection unit 114 selects the first person H1 as a target person of the two tracked persons (the first person H1 and the second person H2).

Also in the third example, the respective processes in steps S61 to S65 are completed before the target person (herein, the first person H1) having entered the entry detection region R3 passes through the face detection limit L. Also in the third example, the notification in step S66, S69 or S72 is performed before the target person (herein, the first person H1) having entered the entry detection region R3 passes through the face detection limit L. Along therewith, the projector 17 displays the message M on the screen 18. The content of the message M is the same as described in the first pattern in the first example illustrated in Figs. 20A to 20D.

In the third example, the respective processes in steps S67, S70 and S73 are completed before the target person (herein, the first person H1) having entered the entry detection region R3 enters the approach detection region R4. The content of UI screens prepared in steps S67, S70 and S73 is the same as described with reference to Figs. 12A to 12D.

Fig. 24D illustrates a state in which the first person H1 who is a target person enters the entry detection region R3 from the person detection region R1, and the second person H2 who is not a target person moves in the person detection region R1. However, in this case, the first person H1 moves in a direction of coming close to the image forming apparatus 10, and the second person H2 moves in a direction of becoming distant from the image forming apparatus 10 compared with the first person H1. Here, in the third example, in a case where a specific person H (in this example, the first person H1) who becomes a target person by entering the person detection region R1 and then approaching the image forming apparatus 10 further approaches the image forming apparatus 10, the instruction unit 113 outputs the instruction for starting the display process, and thus an affirmative determination (YES) is performed in step S80 so that display of the UI screen in step S100 is started. In the third example, the projector 17 finishes the notification of the message M during transition from the state illustrated in Fig. 24C to the state illustrated in Fig. 24D.

Here, in the third example, the display of the UI screen in step S100 may be performed before the target person (herein, the first person H1) who approaches the image forming apparatus 10 in the person detection region R1 enters the person operation region R2. In the above-described way, in a state in which the target person (herein, the first person H1) enters the person operation region R2 and stands in front of the user interface 13, a UI screen corresponding to an authentication result of the target person is already displayed on the touch panel 130.

### (Second pattern)

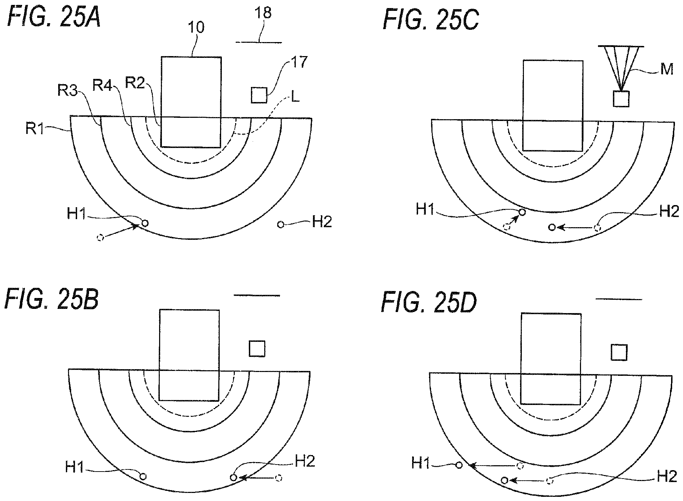

Figs. 25A to 25D illustrate a second pattern in the third example of a temporal change in a position of a person H around the image forming apparatus 10.

Fig. 25A illustrates a state in which the first person H1 enters the person detection region R1 from the outside of the person detection region R1, and the second person H2 is located outside the person detection region R1.

Fig. 25B illustrates a state in which the first person H1 is still present in the person detection region R1, and the second person H2 enters the person detection region R1 from the outside of the person detection region R1.

Fig. 25C illustrates a state in which the first person H1 moves in the person detection region R1, and the second person H2 also moves in the person detection region R1.

Figs. 25A to 25C are respectively the same as Figs. 24A to 24C described in the first pattern, and thus detailed description thereof will be omitted herein.

Fig. 25D illustrates a state in which the first person H1 who is a target person moves to the outside of the person detection region R1 from the person detection region R1, and the second person H2 who is not a target person is still present in the person detection region R1. In the third example, in a case where the first person H1 who becomes a target person as a result of moving in a direction of coming close to the image forming apparatus 10 in the person detection region R1 moves to the outside of the person detection region R1, a negative determination (NO) is performed in step S140.

Here, in a case where authentication is successful in the face authentication process in step S60B (YES in step S160), the face authentication is canceled in step S180. In a case where authentication is successful (YES in step S160) and authentication fails (NO in step S160) in the face authentication process in step S60B, the UI screens prepared in steps S67, S70 and S73 are discarded in step S200. In step S220, the tracking ID and the face information regarding the target person (herein, the first person H1) are deleted from the tracking table. However, information regarding the person H (herein, the second person H2) other than the target person is not deleted from the tracking table, the flow returns to step S20, and then tracking and search for a face are continuously performed.

### (Summary of third example)

As mentioned above, in the third example, unless the first person H1 or the second person H2 who is being tracked in the person detection region R1 moves in a direction of coming close to the image forming apparatus 10, a target person is not generated, and, as a result, the face authentication process in step S60B is not started. In the third example, unless a specific person H as a target person further moves in a direction of approaching the image forming apparatus 10, the UI screen as an authentication result of the target person (the specific person H) in step S100 is not displayed on the touch panel 130.

Here, in the third example, a description has been made of a case where both of the first person H1 and the second person H2 enter the person detection region R1, then t the first person H1 moves in a direction of coming close to the image forming apparatus 10 earlier, and thus the first person H1 becomes a target person. However, in a case where the second person H2 moves in a direction of coming close to the image forming apparatus 10 earlier than the first person H1, the second person H2 becomes a target person. In a case where both of the first person H1 and the second person H2 enter the person detection region R1, and then both of the first person H1 and the second person H2 move to the outside of the person detection region R1 without moving in a direction of coming close to the image forming apparatus 10, a target person is not generated, and thus the face authentication process in step S60B is not started.

Here, in the third example, after the specific person H (the first person H1 in this example) moves in a direction of coming close to the image forming apparatus 10 in the person detection region R1, and is thus selected as a tracked person, the tracked person is not changed from the specific person H (the first person H1) to another person H (the second person H2) even if another person H (the second person H2 in this example) moves in a direction of coming close to the image forming apparatus 10 in a state in which the specific person H continues to move in a direction of coming close to the image forming apparatus 10 in the person detection region R1.

### [Others]

Here, in the above-described first to third examples, a description will be made of a case where two persons H (the first person H1 and the second person H2) are present around the image forming apparatus 10, there may be a case where a single person H is present around the image forming apparatus 10, and a case where three or more persons H are present around the image forming apparatus 10.

Although not described in the first to third examples, in a case where a tracked person who is given a tracking ID in step S24 as a result of entering the person detection region R1 from the outside of the person detection region R1 but does not become a target person (for example, the second person H2) in step S60B moves to the outside of the person detection region R1 from the inside of the person detection region R1, the tracking ID and face information regarding the tracked person (herein, the second person H2) are deleted from the tracking table in step S32.

In the present embodiment, in a case where face information of a target person (tracked person) has not been registered in the face authentication process in step S62 illustrated in Fig. 19 (NO), the UI screen (refer to Fig. 12D) for manual input authentication is displayed on the touch panel 130 in step S71 so that authentication is received through manual inputting, but the present invention is not limited thereto. For example, a face image of a person H staying in the person operation region R2 may be captured by using the second camera 16 provided in the user interface 13, and face information may be acquired from an obtained second camera image so that face authentication can be performed again. In this case, a second camera image may be displayed on the touch panel 130 along with an instruction for prompting capturing of a face image using the second camera 16.

In the present embodiment, in controlling of a mode of the image forming apparatus 10 illustrated in Fig. 6, transition from the sleep mode to the normal mode occurs in step S6, and then detection of the face of the person H is started in step S7, but the present invention is not limited thereto. For example, detection of the face of the person H may be started in conjunction with starting of a process of detecting a motion of the person H in step S4. In this case, the detection of the face of the person H is started in a state in which the sleep mode is set. In a case where the configuration is employed in which the detection of the face of the person H is started in a state in which the sleep mode is set, for example, when there is the instruction for starting the face authentication process in step S40 illustrated in Fig. 18 (YES in step S40), the image forming apparatus 10 may be caused to transition from the sleep mode to the normal mode.

In the present embodiment, a case where the projector 17 displaying an image is used as the notification unit 115 has been described as an example, but the present invention is not limited thereto. Methods may be used in which sound is output from, for example, a sound source, or light is emitted from, for example, a light source (lamp). Here, in the present embodiment, when authentication using the acquired face image has been successful (step S66), when authentication using the acquired face image has failed (step S69), and when authentication cannot be performed since a face image cannot be acquired (step S72), a notification is performed, but the present invention is not limited thereto. For example, (1) before a face image is detected from a first camera image, (2) before authentication using a face image is performed after the face image is detected from the first camera image, and (3) after an authentication process is performed, a notification may be performed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An authentication apparatus (10) comprising:
an imaging unit (109) configured to image a person around the authentication apparatus (10);
an authentication unit (112) configured to authenticate an individual by using a face image of a person imaged by the imaging unit (109); and
an instruction unit (113) configured to give an instruction for starting authentication,
wherein the authentication unit (112) is configured to acquire the face image before the instruction is given by the instruction unit (113), and perform authentication after the instruction is given by the instruction unit (113),
wherein the imaging unit (109) is configured to capture an image of a person present in a first region (R1),
wherein the instruction unit (113) is configured to give an instruction for starting the authentication in a case where a person is present in a second region (R3) which is located inside the first region and wherein the second region is disposed on a side closer to the authentication apparatus (10) within the first region,
wherein the authentication unit (112) is configured to finish authenticating before the person existing in the second region (R3) passes through a face detection limit (L), the face detection limit (L) being provided on a side closer to the authentication apparatus (10) within the second region (R3) and being a limit of a distance at which the imaging unit (109) is configured to acquire the face image suitable for authentication;
wherein the authentication apparatus (10) further comprises a notification unit (115) configured to perform a notification of whether or not authentication in the authentication unit (112) has been successful before the person existing in the second region (R3) approaches closer to the authentication apparatus (10) than the face detection limit (L).

2. The authentication apparatus according to claim 1, wherein the imaging unit (109) is configured to capture an image of a person present in a first region (R1), and
the instruction unit (113) is configured to give an instruction for starting the authentication in a case where a person present in the first region stays in the first region for a set period of time or more which is set in advance.

3. The authentication apparatus according to claim 1, wherein the imaging unit (109) is configured to capture an image of a person present in a first region (R1), and
the instruction unit (113) is configured to give an instruction for starting the authentication in a case where a person present in the first region approaches the authentication apparatus.

4. The authentication apparatus according to any one of claims 1 to 3, wherein the instruction unit (113) is configured to give an instruction for starting the authentication in a case where a person satisfies a condition in which the person is estimated to have an intention to use the authentication apparatus.

5. The authentication apparatus according to claim 1, further comprising:
a holding unit (105) configured to hold a face image captured by the imaging unit (109),
wherein the holding unit is configured to extract a face image satisfying a predefined condition from a plurality of images captured by the imaging unit and hold the face image.

6. The authentication apparatus according to claim 1, further comprising:
a holding unit (105) configured to hold a face image captured by the imaging unit (109),
wherein, in a case where the imaging unit captures face images of a plurality of people, the holding unit is configured to hold each of the face images.

7. The authentication apparatus according to claim 6, further comprising:
a selection unit (114) configured to select a face image used for authentication in a case where the holding unit (105) holds the face images of a plurality of people.

8. The authentication apparatus according to any one of claims 5 to 7, wherein the holding unit (105) is configured to delete face images other than a face image of a person used for authentication after the authentication unit (112) performs the authentication.

## Patentansprüche

1. Authentisierungsvorrichtung (10), umfassend:
eine Bildgebungseinheit (109), die dazu eingerichtet ist, eine Person in der Umgebung der Authentifizierungsvorrichtung (10) abzubilden;
eine Authentisierungseinheit (112), die dazu eingerichtet ist, ein Individuum unter Verwendung eines Gesichtsbilds einer von der Bildgebungseinheit (109) abgebildeten Person zu authentisieren; und
eine Anweisungseinheit (113), die dazu eingerichtet ist, eine Anweisung zum Starten der Authentisierung zu erteilen,
wobei die Authentisierungseinheit (112) dazu eingerichtet ist, das Gesichtsbild zu erfassen, bevor die Anweisung von der Anweisungseinheit (113) erteilt wird, und die Authentisierung durchzuführen, nachdem die Anweisung von der Anweisungseinheit (113) erteilt worden ist,
wobei die Bildgebungseinheit (109) dazu eingerichtet ist, ein Bild einer Person aufzunehmen, die in einem ersten Bereich (R1) anwesend ist,
wobei die Anweisungseinheit (113) dazu eingerichtet ist, eine Anweisung zum Starten der Authentisierung in einem Fall zu erteilen, in welchem eine Person in einem zweiten Bereich (R3) anwesend ist, der im Innern des ersten Bereichs angeordnet ist, und wobei der zweite Bereich auf einer Seite angeordnet ist, die innerhalb des ersten Bereichs näher bei der Authentisierungsvorrichtung (10) ist,
wobei die Authentisierungseinheit (112) dazu eingerichtet ist, das Authentisieren zu beenden, bevor die Person, die in dem zweiten Bereich (R3) anwesend ist, eine Gesichtserkennungsgrenze (L) überschreitet, wobei die Gesichtserkennungsgrenze (L) auf einer Seite vorgesehen ist, die innerhalb des zweiten Bereichs (R3) näher bei der Authentisierungsvorrichtung (10) ist, und eine Grenze eines Abstands ist, bei welchem die Bildgebungseinheit (109) dazu eingerichtet ist, das Gesichtsbild zu erfassen, das zur Authentisierung geeignet ist;
wobei die Authentisierungsvorrichtung (10) ferner eine Benachrichtigungseinheit (115) aufweist, welche dazu eingerichtet ist, eine Benachrichtigung darüber durchzuführen, ob die Authentisierung in der Authentisierungseinheit (112) erfolgreich war, bevor die in dem zweiten Bereich (R3) anwesende Person näher als die Gesichtserkennungsgrenze (L) an die Authentisierungsvorrichtung (10) herankommt.

2. Authentisierungsvorrichtung nach Anspruch 1, wobei die Bildgebungseinheit (109) dazu eingerichtet ist, ein Bild einer Person aufzunehmen, die in einem ersten Bereich (R1) anwesend ist, und
die Anweisungseinheit (113) dazu eingerichtet ist, eine Anweisung zum Starten der Authentisierung in einem Fall zu erteilen, dass eine Person, die in dem ersten Bereich anwesend ist, so lang wie oder länger als eine festgelegte Zeitdauer, die im Voraus festgelegt ist, in dem ersten Bereich bleibt.

3. Authentisierungsvorrichtung nach Anspruch 1, wobei die Bildgebungseinheit (109) dazu eingerichtet ist, ein Bild einer Person aufzunehmen, die in einem ersten Bereich (R1) anwesend ist, und
die Anweisungseinheit (113) dazu eingerichtet ist, eine Anweisung zum Starten der Authentisierung in einem Fall zu erteilen, dass eine Person, die in dem ersten Bereich anwesend ist, sich der Authentisierungsvorrichtung nähert.

4. Authentisierungsvorrichtung nach einem der Ansprüche 1 bis 3, wobei die Anweisungseinheit (113) dazu eingerichtet ist, eine Anweisung zum Starten der Authentisierung in einem Fall zu erteilen, in dem eine Person eine Bedingung erfüllt, bei welcher geschätzt wird, dass die Person beabsichtigt, die Authentisierungsvorrichtung zu benutzen.

5. Authentisierungsvorrichtung nach Anspruch 1, ferner umfassend:
eine Halteeinheit (105), die dazu eingerichtet ist, ein von der Bildgebungseinheit (109) aufgenommenes Gesichtsbild zu halten,
wobei die Halteeinheit dazu eingerichtet ist, unter mehreren von der Bildgebungseinheit aufgenommenen Bildern ein Gesichtsbild zu extrahieren, das eine vordefinierte Bedingung erfüllt, und das Gesichtsbild zu halten.

6. Authentisierungsvorrichtung nach Anspruch 1, ferner umfassend:
eine Halteeinheit (105), die dazu eingerichtet ist, ein von der Bildgebungseinheit (109) aufgenommenes Gesichtsbild zu halten,
wobei in einem Fall, dass die Bildgebungseinheit Gesichtsbilder von mehreren Menschen aufnimmt, die Halteeinheit eingerichtet ist, jedes der Gesichtsbilder zu halten.

7. Authentisierungsvorrichtung nach Anspruch 6, ferner umfassend:
eine Auswahleinheit (114), die dazu eingerichtet ist, ein Gesichtsbild auszuwählen, welches zur Authentisierung benutzt wird, falls die Halteeinheit (105) die Gesichtsbilder von mehreren Menschen hält.

8. Authentisierungsvorrichtung nach einem der Ansprüche 5 bis 7, wobei die Halteeinheit (105) dazu eingerichtet ist, andere Gesichtsbilder als ein für die Authentisierung benutztes Gesichtsbild eines Menschen zu löschen, nachdem die Authentisierungseinheit (112) die Authentisierung durchgeführt hat.

## Revendications

1. Appareil d'authentification (10) comprenant :
une unité d'imagerie (109) configurée pour imager une personne autour de l'appareil d'authentification (10) ;
une unité d'authentification (112) configurée pour authentifier un individu en utilisant une image de visage d'une personne imagée par l'unité d'imagerie (109) ; et
une unité d'instruction (113) configurée pour donner une instruction de démarrage d'authentification,
dans lequel l'unité d'authentification (112) est configurée pour acquérir l'image de visage avant que l'instruction ne soit donnée par l'unité d'instruction (113), et effectuer l'authentification après que l'instruction ait été donnée par l'unité d'instruction (113),
dans lequel l'unité d'imagerie (109) est configurée pour capturer une image d'une personne présente dans une première région (R1),
dans lequel l'unité d'instruction (113) est configurée pour donner une instruction de démarrage de l'authentification dans le cas où une personne est présente dans une seconde région (R3) qui est située à l'intérieur de la première région et dans lequel la seconde région est disposée sur un côté plus proche de l'appareil d'authentification (10) dans la première région,
dans lequel l'unité d'authentification (112) est configurée pour terminer l'authentification avant que la personne existante dans la seconde région (R3) ne dépasse une limite de détection de visage (L), la limite de détection de visage (L) étant prévue sur un côté plus proche de l'appareil d'authentification (10) dans la seconde région (R3) et constituant une limite d'une distance à laquelle l'unité d'imagerie (109) est configurée pour acquérir l'image de visage appropriée pour l'authentification ;
dans lequel l'appareil d'authentification (10) comprend en outre une unité de notification (115) configurée pour effectuer une notification indiquant si l'authentification dans l'unité d'authentification (112) a réussi ou non avant que la personne existant dans la seconde région (R3) se rapproche davantage de l'appareil d'authentification (10) que la limite de détection de visage (L).

2. Appareil d'authentification selon la revendication 1, dans lequel l'unité d'imagerie (109) est configurée pour capturer une image d'une personne présente dans une première région (R1), et
l'unité d'instruction (113) est configurée pour donner une instruction de démarrage de l'authentification dans le cas où une personne présente dans la première région reste dans la première région pendant une période de temps définie, ou plus, qui est définie à l'avance.

3. Appareil d'authentification selon la revendication 1, dans lequel l'unité d'imagerie (109) est configurée pour capturer une image d'une personne présente dans une première région (R1), et
l'unité d'instruction (113) est configurée pour donner une instruction pour démarrer l'authentification dans un cas où une personne présente dans la première région s'approche de l'appareil d'authentification.

4. Appareil d'authentification selon l'une quelconque des revendications 1 à 3, dans lequel l'unité d'instruction (113) est configurée pour donner une instruction de démarrage de l'authentification dans le cas où une personne remplit une condition dans laquelle il est estimé que la personne a une intention d'utiliser l'appareil d'authentification.

5. Appareil d'authentification selon la revendication 1, comprenant en outre :
une unité de conservation (105) configurée pour conserver une image de visage capturée par l'unité d'imagerie (109),
dans lequel l'unité de conservation est configurée pour extraire une image de visage satisfaisant une condition prédéfinie d'une pluralité d'images capturées par l'unité d'imagerie, et pour conserver l'image de visage.

6. Appareil d'authentification selon la revendication 1, comprenant en outre :
une unité de conservation (105) configurée pour conserver une image de visage capturée par l'unité d'imagerie (109),
dans lequel, dans un cas où l'unité d'imagerie capture des images de visage d'une pluralité de personnes, l'unité de conservation est configurée pour conserver chacune des images de visage.

7. Appareil d'authentification selon la revendication 6, comprenant en outre :
une unité de sélection (114) configurée pour sélectionner une image de visage utilisée pour l'authentification dans un cas où l'unité de conservation (105) conserve les images de visage d'une pluralité de personnes.

8. Appareil d'authentification selon l'une quelconque des revendications 5 à 7, dans lequel l'unité de conservation (105) est configurée pour supprimer des images de visage autres qu'une image de visage d'une personne utilisée pour l'authentification après que l'unité d'authentification (112) ait effectué l'authentification.
